# EUROPÄISCHE PATENTSCHRIFT

(11) **EP 3 828 807 B1**
(45) Veröffentlichungstag und Bekanntmachung des Hinweises auf die Patenterteilung: **19.06.2024**
(21) Anmeldenummer: 19211992.3
(22) Anmeldetag: 28.11.2019
(51) Int. Cl.: G06Q 10/08, G06Q 10/0631

(54) **VERFAHREN UND SYSTEM ZUR PROZESSNACHVERFOLGUNG UND/ODER PROZESSÜBERPRÜFUNG**
METHOD AND SYSTEM FOR TRACKING AND/OR MONITORING A PROCESS
PROCÉDÉ ET SYSTÈME POUR SUIVRE ET SURVEILLER UN PROCESSUS

(43) Veröffentlichungstag der Anmeldung: 02.06.2021
(73) Patentinhaber: Youki GmbH, 92224 Amberg (DE)
(72) Erfinder: Stoussavljewitsch, Martin, 92284 Poppenricht (DE); Stoussavljewitsch, Michael, 92284 Poppenricht (DE)
(74) Vertreter: Wolf, Gerhard

(56) Entgegenhaltungen:
- EP-A1- 3 300 206
- SERGEY ILYA ILYA SERGEY@YALE-NUS EDU SG ET AL: "Safer smart contract programming with Scilla", PROCEEDINGS OF THE ACM ON PROGRAMMING LANGUAGES, ACMPUB27, NEW YORK, NY, USA, vol. 3, no. OOPSLA, 10 October 2019 (2019-10-10), pages 1-30, XP058451074, DOI: 10.1145/3360611

## Beschreibung

Die Erfindung betrifft ein Verfahren sowie ein System zur Nachverfolgung und/oder Überprüfung von Prozessen.

Die Herstellung und ggf. auch Lagerung von Produkten, die mit einem Qualitätssiegel gekennzeichnet sind, unterliegen gewissen Qualitätsanforderungen, die durch eine Behörde, ein Prüfinstitut, einem Endkunden o.ä. überprüft werden müssen, um zu garantieren, dass die Produkte den Qualitätsanforderungen entsprechen.

Die Herstellung eines Produkts kann sich über mehrere Einrichtungen einer Lieferkette hinweg erstrecken, so dass die Überprüfung der Qualitätsanforderungen zeit und kostspielig ist. So ist es häufig nur möglich, die Qualitätsanforderungen in größeren Zeitabständen zu überprüfen, um den Aufwand der Qualitätsüberprüfung in einem vertretbaren Rahmen zu halten. Eine Prüfung in größeren Zeitabständen entspricht einer Momentaufnahme. Ein weiteres Problem besteht darin, dass bei einer stichprobenartigen Überprüfung der Prozess nicht vollständig geprüft werden kann, sondern nur punktuell zu den Zeitpunkten, an denen die Überprüfung erfolgt. Eine derartige Überprüfung lässt keine Rückschlüsse zu, ob die Qualitätsanforderungen auch dauerhaft eingehalten werden.

Ein weiteres Beispiel zur Prozessnachverfolgung und/oder Prozessüberprüfung ist beispielsweise die Prozessnachverfolgung für die Erstellung eines CO2-Zertifikats. Dabei muss beispielsweise ermittelt werden, welche Menge an CO2 bei der Herstellung eines Produkts, insbesondere eines landwirtschaftlichen Produkts, ausgestoßen wurde.

Die Druckschrift EP 3 300 206 A1 offenbart ein Energieversorgungssystem und ein Verfahren zum Betreiben eines Energieversorgungssystems.

Nachteilig ist, dass bei einer lediglich stichprobenartigen Überprüfung eine hohe Gefahr von Manipulationen besteht, da der Prozess lediglich in einem oder mehreren begrenzten Zeitfenstern geprüft wird und nicht sichergestellt werden kann, dass der Prozess auch außerhalb dieser Zeitfenster auf gleiche Weise vollzogen wird.

Ausgehend hiervon ist es Aufgabe der Erfindung ein Verfahren zur Nachverfolgung und/oder Überprüfung von Prozessen anzugeben, das eine automatisierte Prozessnachverfolgung bzw. -Überprüfung mit einer hohen Überprüfungssicherheit und einer geringen Gefahr eines Kompromittierens des Prüfverfahrens ermöglicht.

Die Aufgabe wird durch ein Verfahren gemäß den Merkmalen des unabhängigen Patentanspruchs 1 gelöst. Bevorzugte Ausführungsformen sind Gegenstand der Unteransprüche. Ein System zur Nachverfolgung und/oder Überprüfung von Prozessen ist Gegenstand des nebengeordneten Patentanspruchs 15.

Gemäß einem ersten Aspekt bezieht sich die Erfindung auf ein Verfahren zur Prozessnachverfolgung und/oder Prozessüberprüfung basierend auf zumindest einem Rechnernetzwerk, das mehrere Rechnereinheiten umfasst. Das Verfahren weist folgende Schritte auf:

Zunächst wird ein Rechnernetzwerk bereitgestellt. Zumindest eine Rechnereinheit des Rechnernetzwerks weist eine eindeutige Kennung auf, die die Rechnereinheit eindeutig identifiziert. Vorzugsweise weisen alle Rechnereinheiten des Rechnernetzwerks jeweils eine eindeutige Kennung auf.

Anschließend wird eine Zuordnung zwischen der Kennung der Rechnereinheit und zumindest einer Identität geschaffen, wobei die Identität eine Person oder ein Objekt spezifiziert. Beispielsweise kann ein Inhaber eines landwirtschaftlichen Betriebs als Identität definiert werden und seine Identität der Kennung der Rechnereinheit zugeordnet werden. Dadurch wird eine eindeutige Korrelation zwischen einer Rechnereinheit und der Identität geschaffen. Vorzugsweise ist auch die Rechnereinheit der Identität physikalisch zugeordnet. Dies bedeutet insbesondere, dass die Rechnereinheit an einem Ort aufgestellt oder installiert ist, der mit der jeweiligen Identität in Verbindung steht. "In Verbindung steht" kann dabei insbesondere bedeuten, dass die Identität dort arbeitet, lebt, tätig ist etc.

Des Weiteren werden mehrere Smart-Contracts bereitgestellt, die dem nachzuverfolgenden und/oder zu überprüfenden Prozess zugeordnet sind und Prüfkriterien zur Prozessnachverfolgung und/oder Prozessüberprüfung enthalten. In anderen Worten enthalten die Smart-Contracts Vorgaben, die bei der Prozessnachverfolgung und/oder Prozessüberprüfung geprüft werden.

Die Smart-Contracts sind zum verketteten Arbeiten untereinander ausgebildet, und zwar derart, dass zumindest ein zweiter Smart-Contract Informationen von einem ersten Smart-Contract empfängt und diese vom zweiten Smart-Contract auswertet und/oder weiterverarbeitet werden. Insbesondere können die Smart-Contracts Entscheidungsregeln enthalten, basierend auf denen überprüfbar ist, ob gewisse Qualitätskriterien eingehalten wurden. So kann beispielsweise mittels mehrerer miteinander verkettet wirkender Smart-Contracts überprüft werden, ob beispielsweise Qualitätskriterien, die für die Vergabe eines Gütesiegels (z.B. Lebensmittelgütesiegel wie z.B. Bio-Zertifikat, Tierwohl etc.) gelten, eingehalten wurden oder nicht.

Als weiteren Schritt des Verfahrens empfängt eine Rechnereinheit, die Bestandteil des Rechnernetzwerks ist, Prozessinformationen, die einen Prozess charakterisieren. Die Prozessinformationen können jegliche Informationen sein, die während des Prozesses entstehen, beispielsweise Informationen über Tätigkeiten von Identitäten, Messinformationen, Informationen bezüglich Dokumente (schriftlich oder digital), wie beispielsweise Lieferscheine, Rechnungen, Messprotokolle etc. Die Prozessinformationen können insbesondere primäre Prozessinformationen oder sekundäre Prozessinformationen sein. Unter "primäre Prozessinformationen" werden dabei Prozessrohdaten verstanden, die direkt bei einem Prozess entstehen, beispielsweise Messdaten eines Sensors, eingescannte Dokumente, etc. Unter "sekundäre Prozessinformationen" werden solche Prozessinformationen verstanden, die von primären Prozessinformationen abgeleitet werden, beispielsweise durch Weiterverarbeitung der primären Prozessinformationen.

Die empfangenen Prozessinformationen oder davon abgeleitete Informationen (beispielsweise erhalten durch jegliche Art der Weiterverarbeitung) werden in einer Speichereinheit abgespeichert. Die Abspeicherung der Prozessinformationen kann entweder direkt in einer Blockchain erfolgen oder aber in einer Speichereinheit außerhalb einer Blockchain. Auch eine Abspeicherung eines ersten Teils von Prozessinformationen in der Blockchain und eines zweiten Teils von Prozessinformationen außerhalb der Blockchain ist grundsätzlich möglich. Dabei erfolgt das Abspeichern der empfangenen Prozessinformationen unter Bezugnahme auf die Identität der Person oder des Objekts. Dies bedeutet insbesondere, dass die Prozessinformationen der Identität der Person oder des Objekts zugeordnet werden, so dass eindeutig definiert ist, dass die Prozessinformationen von der jeweiligen Identität stammen bzw. das Abspeichern dieser Informationen von dieser Identität veranlasst wurde. So kann beispielsweise ein Mitarbeiter eines landwirtschaftlichen Betriebs den Erhalt einer bestimmten Sorte eines Futtermittels als Prozessinformation unter Angabe seiner Identität zur Abspeicherung an das Rechnernetzwerk schicken.

Bei der Abspeicherung von Prozessinformationen können auch weitere Identitäten beteiligt sein, beispielsweise eine Identität, die einem Sensor zugeordnet ist, basierend auf dem der Lieferbeleg erfasst wurde oder eine Identität, die einem Füllstandsensor des Futtersilos zugeordnet ist, in dem das angelieferte Futtermittel gelagert wird. Auch die Prozessinformationen dieser weiteren beteiligten Identitäten können unter Angabe deren Identität zur Abspeicherung an das Smart-Meter-Gateway-Netzwerk geschickt werden.

Als weiterer Schritt wird zumindest ein Teil der abgespeicherten Prozessinformationen mittels der Smart-Contracts verarbeitet, wobei die Smart-Contracts eine Prozessnachverfolgungs- und/oder Prozessüberprüfungsinformation bereitstellen. Unter "Verarbeitung" wird hierbei verstanden, dass zumindest ein Teil der abgespeicherten Prozessinformationen ausgewertet (beispielsweise durch Vergleichen mit Sollwerten oder Sollwertbereichen) und/oder aggregiert (d.h. mehrere Werte werden miteinander verknüpft bzw. zu einer daraus abgeleiteten Information weiterverarbeitet) werden. Als Ergebnis der Verarbeitung wird die Prozessnachverfolgungs- und/oder Prozessüberprüfungsinformation bereitgestellt.

Zuletzt erfolgt eine Beurteilung des Prozesses basierend auf der Prozessnachverfolgungs- und/oder Prozessüberprüfungsinformation. Dies kann wiederum durch einen oder mehrere Smart-Contracts erfolgen oder aber auch durch eine sonstige Datenverarbeitungsanlage bzw. durch menschliche Beurteilung. Insbesondere kann die Beurteilung des Prozesses mittels mehrerer verkettet miteinander arbeitender Smart-Contracts erfolgen.

Das erfindungsgemäße Verfahren bietet den technischen Vorteil, dass die Bereitstellung der Prozessnachverfolgungs- und/oder Prozessüberprüfungsinformation automatisiert erfolgen kann und dabei eine hohe Authentizität und Wiederholfrequenz der Prozessnachverfolgung bzw. -überprüfung sichergestellt ist.

Gemäß einem Ausführungsbeispiel wird die Rechnereinheit durch ein Smart-Meter-Gateway gebildet oder die Rechnereinheit ist funktionaler Bestandteil eines Smart-Meter-Gateways. Smart-Meter-Gateways bieten aufgrund ihrer Zertifizierung durch eine Behörde oder ein sonstiges Zertifizierungsinstitut eine Hardware mit einer hohen Authentizität, die einen hohen Sicherheitsstandard bietet. Zudem weist jedes Smart-Meter-Gateway eine eindeutige Kennung auf, die zur Identifizierung des Smart-Meter-Gateways und zur Zuordnung von Identitäten zu dem Smart-Meter-Gateway verwendet werden kann.

In Bezug auf nähere technische Ausgestaltungen des Smart-Meter-Gateways sei auf die technische Richtlinie des Bundesamts für Sicherheit in der Informationstechnik (BSI) TR-03109-1, Version 1.0 verwiesen.

Gemäß einem Ausführungsbeispiel wird das Rechnernetzwerk durch ein Smart-Meter-Gateway-Netzwerk umfassend mehrere Smart-Meter Gateways gebildet wird, wobei ein Smart-Meter-Gateway des Rechnernetzwerks die Rechnereinheit bildet. In anderen Worten wird also das Rechnernetzwerk durch eine Vielzahl von untereinander durch ein Netzwerk verknüpfte Smart-Meter-Gateways gebildet. Damit kann die Prozessnachverfolgung in einem Netzwerk mit hoher Authentizität vollzogen werden.

Gemäß einem Ausführungsbeispiel weist das Smart-Meter-Gateway-Netzwerk mehrere Smart-Meter Gateways auf, die an unterschiedlichen Orten installiert sind. Ein Smart-Meter Gateway ist vorzugsweise an der Anlage oder im engen örtlichen Bezug zu der Anlage installiert, die anderen Smart-Meter Gateways sind jedoch örtlich getrennt von dieser Anlage vorgesehen, beispielsweise an unterschiedlichen stromerzeugenden oder stromverbrauchenden Einrichtungen (z.B. Häusern, Kraftwerken, Photovoltaikanlagen, gewerblich genutzten Gebäuden etc.).

Gemäß einem Ausführungsbeispiel sind die Smart-Meter Gateways des Smart-Meter-Gateway-Netzwerks durch eine kryptographisch gesicherte Netzwerkverbindung miteinander gekoppelt. Dadurch wird eine sichere Kommunikation zwischen den Smart-Meter Gateways des Smart-Meter-Gateway-Netzwerks sichergestellt.

Gemäß einem Ausführungsbeispiel werden Teilschritte des Verfahrens in verschiedenen Zonen, insbesondere Systemzonen vollzogen, wobei jeder Zone ein Smart-Meter-Gateway-Netzwerk umfassend mehrere Smart-Meter Gateways zugeordnet ist. Die Smart-Meter-Gateway-Netzwerke der einzelnen Zonen weisen dabei zumindest teilweise, vorzugsweise vollständig unterschiedliche Smart-Meter Gateways auf. Dadurch können die zu vollziehenden Prozesse auf mehrere unterschiedliche Smart-Meter-Gateway-Netzwerke mit unterschiedlichen Hardware-Ressourcen verteilt werden, so dass die Systemerfordernisse (z.B. hinsichtlich Prozessorleistung und/oder Speicherkapazität) der einzelnen Smart-Meter Gateways begrenzt sein können.

Gemäß einem Ausführungsbeispiel sind der Rechnereinheit, die die Prozessinformationen empfängt, eine Vielzahl von Identitäten zugeordnet, die untereinander durch Identitätsbeziehungen verknüpft sind. Die Identitätsbeziehungen geben beispielsweise an, dass und/oder wie die Vielzahl von Identitäten untereinander in Verbindung stehen. Die Vielzahl von Identitäten kann beispielsweise über eine baumartige Identitätsstruktur miteinander in Verbindung stehen. Dadurch ist über die Identitätsbeziehungen beispielsweise eindeutig eine Identitätshierarchie definiert und es kann eine Prozessinformation, die einer Identität (z.B. Mitarbeiter auf einem landwirtschaftlichen Betrieb) aus einem unteren Hierarchielevel zugeordnet ist, auch mit einer Identität in Verbindung gebracht werden, die in einem höheren Hierarchielevel (z.B. Inhaber eines landwirtschaftlichen Betriebs) zugeordnet ist.

Gemäß einem Ausführungsbeispiel sind die Identitäten und deren Identitätsbeziehungen zueinander in einer Kette von kryptographisch miteinander verknüpften Datensätzen (d.h. in einer Blockchain) in einem Rechnernetzwerk gespeichert. Insbesondere sind die Identitäten und deren Identitätsbeziehungen zueinander in zumindest einem Smart-Contract spezifiziert, wobei dieser zumindest eine Smart-Contract in einer Kette von kryptographisch miteinander verknüpften Datensätzen (d.h. in einer Blockchain) in einem Rechnernetzwerk gespeichert ist. Dadurch ist sichergestellt, dass die Identitäten und deren Beziehungen untereinander sicher und unkompromittierbar gespeichert sind.

Gemäß einem Ausführungsbeispiel ist der zumindest einen Identität ein kryptographischer Schlüssel zugeordnet. Der kryptographische Schlüssel kann beispielsweise ein Schlüsselpaar eines asymmetrischen Verschlüsselungsverfahrens sein, d.h. einen öffentlichen und einen privaten Schlüssel umfassen. Das Abspeichern der empfangenen Prozessinformationen oder davon abgeleiteter Informationen erfolgt unter Bezugnahme auf die Identität der Person oder des Objekts durch ein Verschlüsseln der abzuspeichernden Prozessinformation basierend auf dem kryptographischen Schlüssel der Identität. Vorzugsweise wird die Identität durch den kryptographischen Schlüssel eindeutig definiert, so dass durch das Verschlüsseln der Prozessinformationen mit dem kryptographischen Schlüssel gleichzeitig eine Zuordnung der abzuspeichernden Prozessinformation zu der Identität erfolgt.

Gemäß einem Ausführungsbeispiel werden zumindest einer Identität der Vielzahl von Identitäten Administratorrechte zur Verwaltung der Zugriffsrechte auf die abgespeicherten Prozessinformationen zugeordnet. Zugriffsrecht bedeutet hierbei insbesondere einen Lesezugriff. Eine Veränderung (z.B. durch Schreibzugriff) von bereits in der Blockchain gespeicherten Informationen ist nicht möglich. Dadurch können Zugriffsrechte auf die abgespeicherten Prozessinformationen bedarfsabhängig vergeben werden.

Gemäß einem Ausführungsbeispiel werden die Prozessinformationen in einer Speichereinheit verschlüsselt abgespeichert, wobei das Abspeichern zumindest teilweise nicht direkt in einer Kette von kryptographisch miteinander verknüpften Datensätzen (d.h. der Blockchain) erfolgt. Jedoch wird zur Dokumentation der Integrität der abgespeicherten Prozessinformationen ein durch einen Hash-Algorithmus erzeugter reduzierter Datensatz dieser Prozessinformationen in einer Kette von kryptographisch miteinander verknüpften Datensätzen abgelegt.

Alternativ ist es möglich, dass - speziell bei kleineren anfallenden Datenmengen - die Prozessinformationen direkt in der Kette von kryptographisch miteinander verknüpften Datensätzen (d.h. der Blockchain) abgespeichert werden. Diese Kette von kryptographisch miteinander verknüpften Datensätzen wird vorzugsweise in dem Smart-Meter-Gateway-Netzwerk gehostet.

Weiterhin alternativ ist es möglich, dass die Prozessinformationen bedarfsabhängig bzw. abhängig von der anfallenden Informationsmenge entweder in der Kette von kryptographisch miteinander verknüpften Datensätzen oder in einer Speichereinheit (verbunden mit einer informationsreduzierten Abspeicherung in der Blockchain) gespeichert werden. In anderen Worten können also Teile der Prozessinformationen direkt in der Blockchain gespeichert werden und andere Teile werden erst nach einer Informationsreduktion, beispielsweise durch einen Hash-Algorithmus, in der Blockchain gespeichert.

Gemäß einem Ausführungsbeispiel werden den Prozess charakterisierende Dokumente als Prozessinformationen abgespeichert, und zwar unter Zuordnung zu einer Identität der Person oder des Objekts. Dabei werden unter "Dokumente" sowohl gescannte Dokumente als auch Sätze digitaler Daten verstanden, die einen Informationssatz mit einer Vielzahl von Einzelinformationen enthalten. Dadurch ist es möglich, zur Prozessnachverfolgung und/oder -Überprüfung auch Informationen wie beispielsweise Lieferscheine, Rechnungen, Prüfberichte, Prüfzertifikate und/oder Produktdatenblätter zu verwenden.

Gemäß einem Ausführungsbeispiel wird zur Prozessnachverfolgung und/oder Prozessüberprüfung durch die Smart-Contracts basierend auf den abgespeicherten Prozessinformationen geprüft, ob eine oder mehrere Bedingungen erfüllt sind, und das Ergebnis dieser Überprüfung wird als Prozessnachverfolgungs- und/oder Prozessüberprüfungsinformation bereitgestellt. Dabei sind die abgespeicherten Prozessinformationen an sich bei dieser Prozessnachverfolgung und/oder Prozessüberprüfung für die Personen, Objekte und/oder Smart-Contracts, die die Prozessnachverfolgungs- und/oder Prozessüberprüfungsinformation empfangen, nicht sichtbar.

In anderen Worten erfolgt bei der Bereitstellung der Prozessnachverfolgungs- und/oder Prozessüberprüfungsinformation kein direkter Zugriff auf die abgespeicherten Prozessinformationen, sondern lediglich ein mittelbarer Lese-Zugriff über die Smart-Contracts, die die abgespeicherten Prozessinformationen verarbeiten. Dadurch kann sichergestellt werden, dass ohne Zustimmung des Dateninhabers keine vertraulichen Primär-Informationen, beispielsweise solche, die betriebliche, schützenswerte Daten o.ä. enthalten, nach außen gelangen können.

Wie zuvor ausgeführt, wird eine Kette von untereinander zusammenwirkenden Smart-Contracts zur Bereitstellung der Prozessnachverfolgungs- und/oder Prozessüberprüfungsinformation verwendet. Die Smart-Contracts können dabei auch dynamisch und selektiv zusammenwirken, beispielsweise derart, dass das Zusammenwirken der Smart-Contracts davon abhängig ist, ob gewisse Bedingungen erfüllt sind oder nicht. Dadurch können durch das Zusammenwirken einer Vielzahl von Smart-Contracts auch komplexe Nachverfolgungen bzw. Überprüfungen vollzogen werden, die sich beispielsweise auch über mehrere unterschiedliche am Prozess beteiligte Prozesspartner (beispielsweise Futtermittellieferant, landwirtschafticher Betrieb, Molkerei etc.) erstrecken.

Gemäß einem Ausführungsbeispiel bildet die Kette von untereinander zusammenwirkenden Smart-Contracts eine Lieferkette mehrerer in einem Gesamtprozess zusammenwirkender Prozesspartner ab. Dabei agieren die Smart-Contracts untereinander derart miteinander, dass zumindest ein zweiter Smart-Contract Informationen von einem ersten Smart-Contract, der in der Kette vor dem zweiten Smart-Contract angeordnet ist, empfängt und diese auswertet und/oder weiterverarbeitet. Beispielsweise stellt der erste Smart-Contract Prozessteilnachverfolgungs- und/oder Prozessteilüberprüfungsinformationen bereit, die von dem zweiten Smart-Contract weiterverarbeitet werden. Dadurch kann sichergestellt werden, dass eine sich über mehrere Prozesspartner vollziehende Prozessnachverfolgung bzw. Prozessüberprüfung möglich wird, ohne dass die Prozessinformationen direkt eingesehen werden müssen. In anderen Worten wirken die Smart-Contracts quasi als Filter zwischen den Prozesspartnern und stellen sicher, dass die Prozessinformationen nicht direkt einsehbar werden, sondern lediglich durch die Smart-Contracts aggregierte Informationen.

Gemäß einem Ausführungsbeispiel werden durch die Kette von untereinander zusammenwirkenden Smart-Contracts Prozessinformationen von mehreren unterschiedlichen Identitäten, denen Kennungen unterschiedlicher Rechnereinheiten zugeordnet sind, zu einer Prozessnachverfolgungs- und/oder Prozessüberprüfungsinformation zusammengeführt. So können beispielsweise drei Prozesspartner durch jeweilige Identitäten repräsentiert werden und jeder dieser Identitäten ist jeweils eine Rechnereinheit mit einer bestimmten Kennung zugeordnet (beispielsweise Futtermittellieferant, landwirtschaftlicher Betrieb, Molkerei). Durch die Verkettung der Smart-Contracts können die Prozessinformationen, die beispielsweise für ein gewisses Gütesiegel nötig sind, überprüft werden, so dass automatisiert festgestellt werden kann, ob die erforderlichen Qualitätskriterien für das Prüfsiegel erfüllt wurden oder nicht.

Gemäß einem Ausführungsbeispiel werden die Prozessinformationen durch mehrere unterschiedliche technische Einrichtungen (z.B. Geräte, Sensoren, Messapparate etc.) bereitgestellt. Die Prozessinformationen der unterschiedlichen technischen Einrichtungen werden durch mehrere Smart-Contracts zusammengeführt. In anderen Worten werden mehrere Smart-Contracts dazu verwendet, eine Aggregation von Informationen, die von unterschiedlichen technischen Einrichtungen stammen, vorzunehmen und diese geeignet weiterzuverarbeiten. So können beispielsweise Informationen eines ersten Sensors, der die Bewegung eines Tiers (z.B. erster Tierwohlparameter) misst und Informationen eines zweiten Sensors, der die Köpertemperatur des selben Tiers (z.B. zweiter Tierwohlparameter) misst, in einem Smart-Contract zusammengeführt und weiterverarbeitet werden, um festzustellen, ob das Tier die Anforderungen für ein gewisses Qualitätsgütesiegel von aus diesem Tier gewonnenen Lebensmitteln (Milch, Fleisch etc.) erfüllt oder nicht.

Gemäß einem Ausführungsbeispiel ist zumindest eine Applikation in einer Kette von kryptographisch miteinander verknüpften Datensätzen in einem Rechnernetzwerk, insbesondere einem Smart-Meter-Gateway-Netzwerk gespeichert und/oder gehostet, wobei die Applikation eine lauffähige, insbesondere im Rechnernetzwerk bzw. Smart-Meter-Gateway-Netzwerk lauffähige Applikation ist, die Zugriff auf die abgespeicherten Prozessinformationen hat. Durch das Ausführen der Applikation wird einer Identität abhängig von deren Zugriffsrechten ein Zugriff auf die abgespeicherten Prozessinformationen an einem Endgerät bereitgestellt. So ist die Applikation, mittels der die abgespeicherten Prozessinformationen zugänglich gemacht werden, nicht direkt auf dem Endgerät gespeichert', sondern die Applikation wird im Rechnernetzwerk selbst ausgeführt und das Endgerät dient lediglich als Ausgabegerät für die Prozessinformationen. Ein "Endgerät" kann dabei jegliches technisches Gerät sein, das eine Anzeigeeinheit umfasst und zur Ausgabe der Prozessinformationen ausgebildet ist. Beispiele hierfür sind insbesondere feststehende Computer, Laptops, Tablet-PCs, Smartphones etc.

Gemäß einem Ausführungsbeispiel weist das Rechnernetzwerk, insbesondere das Smart-Meter-Gateway-Netzwerk, einen proof-of-stake-Konsensmechanismus zur Bestimmung, ob ein vorgeschlagener oder welcher der vorgeschlagenen Datenblöcke in die Kette von kryptographisch miteinander verknüpften Datensätzen eingebunden wird, auf. Ein proof-of-stake-Konsensmechanismus benötigt geringere Rechenressourcen zur Erzielung eines Konsenses als ein Proof-of-work-Konsensmechanismus. Da insbesondere die Rechenleistung der Smart-Meter Gateways beschränkt ist, kann mittels eines proof-of-stake-Konsensmechanismus ein Konsens in geringerer Zeit erreicht werden. Alternativ können auch andere Konsensmechanismen verwendet werden, beispielsweise ein proof-of-work-Konsensmechanismus, ein proof-ofidentity- Konsensmechanismus oder ein proof-of-authority-Konsensmechanismus.

Gemäß einem weiteren Aspekt betrifft die Erfindung ein System zur Prozessnachverfolgung und/oder Prozessüberprüfung basierend auf zumindest einem Rechnernetzwerk umfassend mehrere Rechnereinheiten, wobei zumindest eine Rechnereinheit eine eindeutige Kennung aufweist. Das System ist dazu ausgebildet, die folgenden Abläufe durchzuführen:
- Eindeutiges Zuordnen der Kennung der Rechnereinheit zu zumindest einer Identität, wobei die Identität eine Person oder ein Objekt spezifiziert;
- Bereitstellen mehrerer Smart-Contracts, die dem nachzuverfolgenden und/oder zu überprüfenden Prozess zugeordnet sind und Prüfkriterien zur Prozessnachverfolgung und/oder Prozessüberprüfung enthalten, wobei die Smart-Contracts zum verketteten Arbeiten untereinander ausgebildet sind, und zwar derart, dass zumindest ein zweiter Smart-Contract Informationen von einem ersten Smart-Contract empfängt und diese auswertet und/oder weiterverarbeitet;
- Empfangen von Prozessinformationen, die einen Prozess charakterisieren, durch zumindest eine Rechnereinheit, wobei die Rechnereinheit Bestandteil des Rechnernetzwerks ist;
- Abspeichern der empfangenen Prozessinformationen oder davon abgeleiteter Informationen in einer Speichereinheit, wobei das Abspeichern der empfangenen Prozessinformationen unter Bezugnahme auf die Identität der Person oder des Objekts erfolgt;
- Verarbeiten zumindest eines Teils der abgespeicherten Prozessinformationen mittels der Smart-Contracts, wobei die Smart-Contracts eine Prozessnachverfolgungs- und/oder Prozessüberprüfungsinformation bereitstellen; und
- Ausgeben der Prozessnachverfolgungs- und/oder Prozessüberprüfungsinformation.

Unter "Smart-Meter-Gateway" im Sinne der vorliegenden Erfindung wird die zentrale Rechen- und Kommunikationseinheit eines intelligenten Messsystems verstanden.

Unter "Identität" im Sinne der vorliegenden Erfindung wird ein oder mehrere Charakteristika verstanden die zur Kennzeichnung einer Person, eines Objekts oder eines Gegenstands verwendet werden können.

Unter "Smart-Contract" im Sinne der vorliegenden Erfindung wird ein Computerprotokoll oder eine durch einen Prozessor ausführbare Software verstanden, der/die einen Vertrag abbildet. Ein smart-contract bildet insbesondere die Logik vertraglicher Regelungen oder von festgelegten Kriterien mit technischen Mitteln (insbesondere durch geeigneten ausführbaren Code) ab.

Unter "enabled device" im Sinne der vorliegenden Erfindung wird ein Gerät verstanden, das einer Identität zugeordnet und technisch dazu eingerichtet ist, über eine Netzwerkverbindung direkt Verbindung mit der Blockchain der Identität, der es zugeordnet ist, aufzunehmen und in diese Daten einfügen kann oder das Einfügen von Daten zu veranlassen.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Darstellung einer Einrichtung in Form eines landwirtschaftlichen Betriebs, der mit einem Messaufnehmer und einer Rechnereinheit in Form eines Smart-Meter-Gateways gekoppelt ist;
- Fig. 2: beispielhaft eine schematische Darstellung einer Einrichtung in Form eines landwirtschaftlichen Betriebs, dessen Rechnereinheit in Form eines Smart-Meter-Gateways in ein Rechnernetzwerk, nämlich ein Smart-Meter-Gateway-Netzwerk, eingebunden ist;
- Fig. 3: beispielhaft ein Identitätsbaum, der über Identitätsbeziehungen angibt, wie unterschiedliche Identitäten miteinander gekoppelt sind;
- Fig. 4: beispielhaft ein in mehrere Zonen unterteiltes System umfassend mehrere Smart-Meter-Gateway-Netzwerke, die zum Austausch von Informationen über ein Netzwerk miteinander gekoppelt sind;
- Fig. 5: beispielhaft und schematisch eine Darstellung, die Informationsflüsse und das Zusammenwirken der Komponenten des erfindungsgemäßen Systems bei der Überwachung von Qualitätskritierien eines Gütesiegels veranschaulicht; und
- Fig. 6: beispielhaft ein Ablaufdiagramm, das die Schritte eines Verfahrens zur Prozessnachverfolgung und/oder Prozessüberprüfung veranschaulicht.

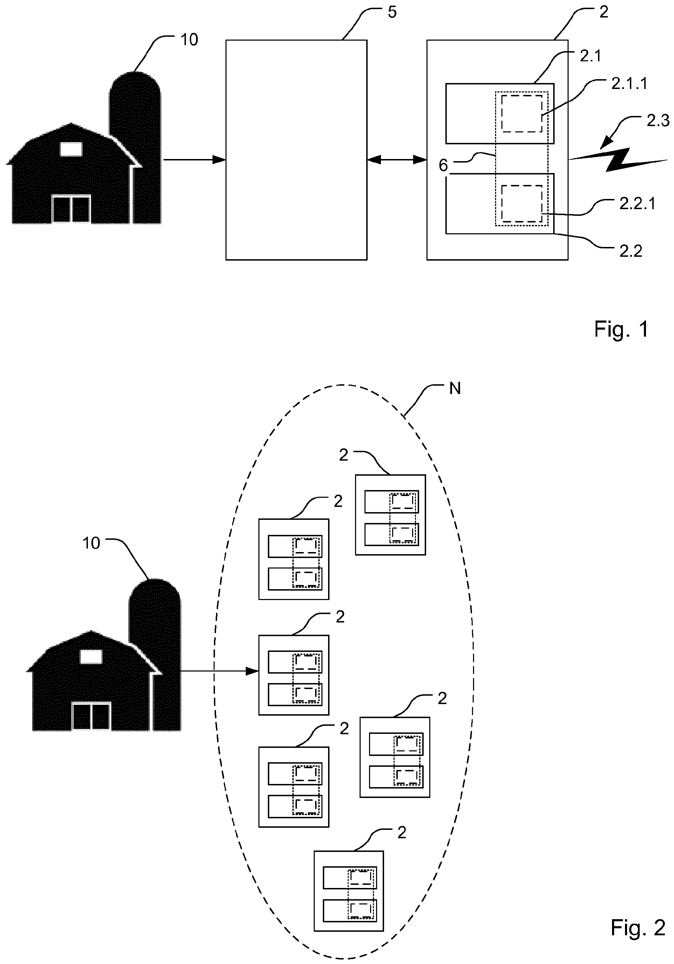

In Figur 1 ist beispielhaft und grob schematisch ein mit einem Messaufnehmer 5 gekoppeltes Smart-Meter-Gateway 2 gezeigt, das Messdaten von dem Messaufnehmer 5, beispielsweise einem Stromzähler, empfängt, diese speichert und ggf. aufbereitet, um die Messdaten oder davon abgeleitete Informationen (beispielsweise durch eine Weiterverarbeitung der Messdaten) an einen Informationsempfänger weiterzuleiten. Derartige Informationsempfänger können beispielsweise eine Abrechnungsstelle, ein Versorgungsunternehmen etc. sein. Somit bildet das Smart-Meter-Gateway 2 ein Gateway für die Kommunikation des Messaufnehmers 5 nach außen.

Das Smart-Meter-Gateway 2 ist vorzugsweise in unmittelbarer örtlicher Nähe zu dem Messaufnehmer 5 angeordnet. Das Smart-Meter-Gateway 2 kann beispielsweise in einer Verbrauchsstelle, insbesondere einem Gebäude, vorgesehen sein, in dem sich auch der Messaufnehmer 5 befindet. Alternativ kann der Messaufnehmer 5 und das Smart-Meter-Gateway 2 einer energieerzeugenden Anlage zugeordnet sein, um die von der Anlage erzeugte Energie zu bestimmen und Informationen über diese erzeugte Energie nach außen zu kommunizieren.

Das Smart-Meter-Gateway 2 weist zumindest einen Prozessor 2.1 zur Durchführung von Rechenoperationen und eine Speichereinheit 2.2 für die Abspeicherung von Daten auf.

Im gezeigten Ausführungsbeispiel ist ein gekapselter Bereich 6 vorgesehen, der in Figur 1 durch ein punktiert gezeichnetes Rechteck dargestellt ist. Dieser gekapselte Bereich 6 bildet eine sog. "sandbox", d.h. einen isolierten Bereich, so dass die Rechen- und Speicherprozesse in diesem gekapselten Bereich 6 keine Auswirkungen auf die übrigen Prozesse (beispielsweise Erfassung und Auswertung von Messdaten) haben, die außerhalb des gekapselten Bereichs 6 durch das Smart-Meter-Gateway 2 abgearbeitet werden.

Dem gekapselten Bereich 6 können insbesondere ein Prozessorbereich 2.1.1 des Prozessors 2.1 und ein Speicherbereich 2.2.1 der Speichereinheit 2.2 zugewiesen sein, so dass der gekapselte Bereich 6 grundsätzlich auf die gleiche Hardware zugreift, die auch für die übrigen in der Smart-Meter-Gateway 2 verarbeiteten Prozesse (beispielsweise Erfassung und Auswertung von Messdaten) verwendet werden. Jedoch wird eine virtuelle Trennung dadurch erreicht, dass dem gekapselten Bereich 6 beispielsweise ein anderer Prozessorbereich 2.1.1 (beispielsweise ein Prozessorkern eines Mehrkernprozessors) und ein anderer Speicherbereich 2.2.1 (andere Speicheradressen) zugewiesen sind als den übrigen in der Smart-Meter-Gateway 2 verarbeiteten Prozessen. In anderen Worten wird demnach eine virtuelle Kapselung für die Prozesse zur Prozessnachverfolgung und/oder Prozessüberprüfung erreicht.

Alternativ kann der gekapselte Bereich 6 einen eigenen Prozessor und eine eigene Speichereinheit aufweisen, auf die die übrigen in dem Smart-Meter-Gateway 2 verarbeiteten Prozesse (beispielsweise Erfassung und Auswertung von Messdaten) keinen Zugriff haben, so dass anstelle einer virtuellen Trennung eine physische Trennung erreicht wird.

Beispielsweise kann der gekapselte Bereich 6 als aufsteckbares Modul ausgebildet sein und mit dem Smart-Meter-Gateway 2 durch Aufstecken zum Austausch von Informationen gekoppelt sein. Der Austausch von Informationen über die Schnittstelle erfolgt bevorzugt verschlüsselt. Weiterhin vorzugsweise erfolgt der Austausch von Informationen über eine HAN/CLS-Schnittstelle (HAN: Home Area Network; CLS: Controllable Local System). Durch das Aufstecken kann vorzugsweise auch die energetische Versorgung des Moduls sichergestellt werden. Vorzugsweise erfolgt auch eine Authentifizierung des aufsteckbaren Moduls gegenüber dem Smart-Meter-Gateway 2. Weiterhin vorzugsweise wird durch das Aufstecken auch die mechanische Fixierung des Moduls an dem Smart-Meter-Gateway 2 erreicht. Die Schnittstelle zur Versorgung des Moduls mit Informationen und Energie kann insbesondere durch eine länglich ausgebildete Kontaktleiste gebildet sein.

Das gekapselte Modul kann eine TCP/IP-basierte Schnittstelle bereitstellen, über die Drittgeräte mit dem Smart-Meter-Gateway 2 gekoppelt werden können. Insbesondere können über diese TCP/IPbasierte Schnittstelle mehrere an unterschiedlichen Orten aufgestellte Smart-Meter-Gateways 2 zu einem Smart-Meter-Gateway-Netzwerk N zusammengefasst werden, um Transaktionen durchzuführen.

Der gekapselte Bereich 6 kann, abhängig von der Konfiguration des Smart-Meter-Gateways 2 auch Messdaten oder von Messdaten abgeleitete Informationen empfangen. Dies kann beispielsweise über einen internen Datenaustausch in dem Smart-Meter-Gateway 2 zwischen dem gekapselten Bereich 6 und einem vom gekapselten Bereich 6 virtuell oder physisch getrennten Bereich erfolgen. Ein direkter Zugriff auf Speicherbereiche, in denen die Messdaten oder von Messdaten abgeleitete Informationen gespeichert sind, ist aus dem gekapselten Bereich 6 heraus vorzugsweise nicht möglich.

Des Weiteren weist die das Smart-Meter-Gateway 2 eine Kommunikationsschnittstelle 2.3 auf, über die durch das Smart-Meter-Gateway 2 Daten versendet und empfangen werden können.

Das zuvor im Zusammenhang mit der Figur 1 beschriebene Smart-Meter-Gateway 2 kann in allgemeiner Form auch durch jegliche Rechnereinheit gebildet sein, die technisch dazu ausgebildet ist, zumindest teilweise die Prozesse zur Prozessnachverfolgung und/oder Prozessüberprüfung durchzuführen. Die Rechnereinheit kann dabei ebenfalls dem Messaufnehmer 5 zugeordnet sein, d.h. in unmittelbarer Nähe des Messaufnehmers 5 angeordnet sein oder aber eine vom Messaufnehmer 5 unabhängige Rechnereinheit sein. Somit kann für den allgemeinen Fall der Begriff "Smart-Meter-Gateway" durch "Rechnereinheit" ersetzt werden.

Fig. 2 zeigt beispielhaft und schematisch die Einbindung des Smart-Meter-Gateways 2, das mit einer Energie, insbesondere Strom, verbrauchenden und/oder erzeugenden Einrichtung 10 gekoppelt ist, in ein Smart-Meter-Gateway-Netzwerk N. Die Einrichtung 10 kann beispielsweise ein landwirtschaftlicher Betrieb sein, dessen Prozesse zumindest teilweise überprüft bzw. nachverfolgt werden sollen. Es versteht sich, dass die Erfindung jedoch nicht auf diesen Anwendungsfall begrenzt ist und bei einer Vielzahl von anderen Szenarien zur Nachverfolgung bzw. Überprüfung von Prozessen eingesetzt werden kann (z.B. industrielle Prozesse).

Im allgemeinen Fall, dass Rechnereinheiten anstelle von Smart-Meter-Gateways vorgesehen sind, kann das Smart-Meter-Gateway-Netzwerk N durch ein Rechnernetzwerk gebildet werden, das mehrere miteinander vernetzte Rechnereinheiten aufweist. Somit kann in diesem Fall der Begriff "Smart-Meter-Gateway-Netzwerk" durch "Rechnernetzwerk" ersetzt werden.

Das Smart-Meter-Gateway-Netzwerk N (allgemein "Rechnernetzwerk") umfasst eine Vielzahl von Smart-Meter-Gateways 2 (allgemein "Rechnereinheiten"), die an unterschiedlichen Orten installiert sind. Im Falle, dass die Rechnereinheiten durch Smart-Meter-Gateways gebildet werden, ist eines der Smart-Meter-Gateways 2 mit der Einrichtung 10 zur Erfassung deren erzeugter bzw. verbrauchter Energie, insbesondere Strom, gekoppelt. Die anderen Smart-Meter-Gateways 2 sind mit weiteren Messaufnehmern 5 gekoppelt, beispielsweise mit Stromzählern in Häusern, Betrieben, oder auch anderen Energieerzeugungsanlagen. Die Smart-Meter-Gateways 2 bzw. Rechnereinheiten des Smart-Meter-Gateway-Netzwerks N bzw. des Rechnernetzwerks sind untereinander über eine sichere Netzwerkverbindung gekoppelt, so dass diese Daten untereinander austauschen können. Das Smart-Meter-Gateway-Netzwerk N bzw. das Rechnernetzwerk ist dabei insbesondere als sog. Blockchain-Netzwerk ausgebildet, d.h. die Smart-Meter-Gateways 2 bzw. Rechnereinheiten des Smart-Meter-Gateway-Netzwerks N bzw. des Rechnernetzwerks speichern jeweils eine Kette von kryptographisch miteinander verknüpften Datensätzen (sog. Blockchain). Zudem sind die Smart-Meter-Gateways 2 bzw. Rechnereinheiten, wie zuvor beschrieben, dazu ausgebildet, in die Blockchain einzubindende Datensätze zu berechnen. Vorzugsweise werden in die Blockchain einzubindende Datensätze von mehreren Smart-Meter-Gateways 2 bzw. Rechnereinheiten parallel berechnet und es wird über einen Konsensmechanismus entschieden, welcher Datensatz der Vielzahl von generierten Datensätzen in die Blockchain eingebunden wird. Hierbei nutzt das Smart-Meter-Gateway-Netzwerk N bzw. das Rechnernetzwerk vorzugsweise einen proof-of-stake-Konsensmechanismus, um im Vergleich zu einem proof-of-work-Konsens einen rechenressourcensparenden Konsens zu erreichen.

Das Smart-Meter-Gateway 2 der Einrichtung 10 weist eine eindeutige Kennung auf. Diese Kennung ist beispielsweise eine ID, die für das Smart-Meter-Gateway 2 vergeben wurde. Über diese Kennung bzw. ID lässt sich das Smart-Meter-Gateway 2 eindeutig identifizieren. Im allgemeinen Fall einer Rechnereinheit kann auch diese eine eindeutige Kennung aufweisen. Dieser Kennung bzw. ID wird zumindest eine Identität zugeordnet. Diese Identität kann beispielsweise der Eigentümer, der Inhaber bzw. der Geschäftsführer der Einrichtung 10 oder eine sonstige Person sein.

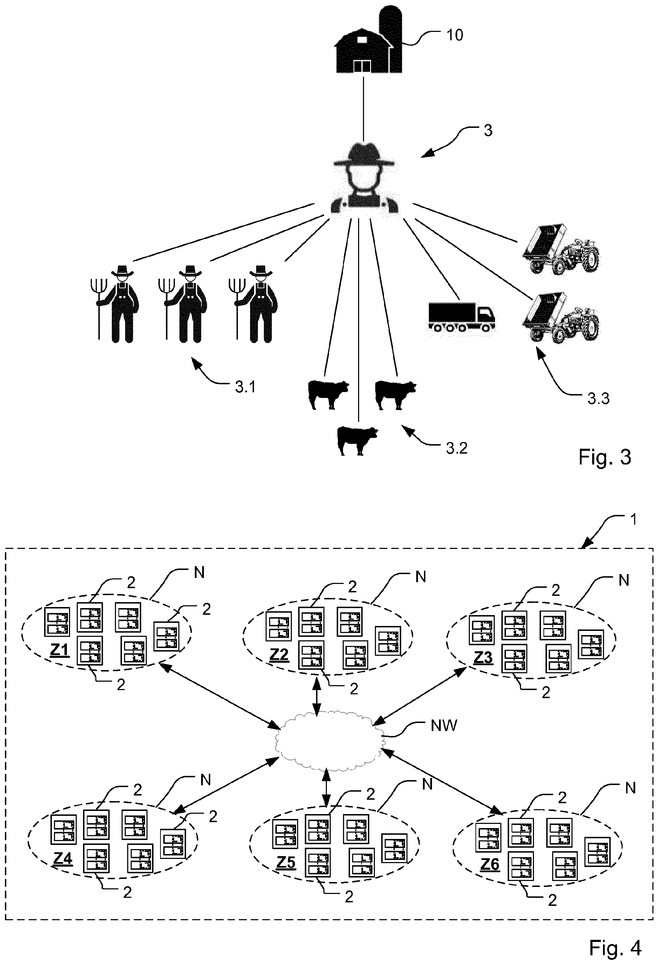

Vorzugsweise sind dem Smart-Meter-Gateway 2 bzw. der Rechnereinheit der Einrichtung 10 mehrere Identitäten zugeordnet. Diese mehreren Identitäten können untereinander über Identitätsbeziehungen miteinander verbunden sein. Diese Identitätsbeziehungen können insbesondere eine baumartige Struktur haben. Fig. 3 zeigt beispielhaft die Identitätsbeziehungen mehrerer Identitäten untereinander anhand einer bauartigen Struktur. Ausgehend von der Einrichtung 10, im gezeigten Ausführungsbeispiel ein landwirtschaftlicher Betrieb, mit dem Smart-Meter-Gateway 2 bzw. der Rechnereinheit, deren Kennung bzw. ID die weiteren Identitäten zugeordnet sind, folgt im gezeigten Ausführungsbeispiel beispielsweise die Identität 3 des Inhabers bzw. des Geschäftsführers des Betriebs. Diesem sind wiederum eine Vielzahl von Identitäten über Identitätsbeziehungen zugeordnet, beispielsweise ein oder mehrere Mitarbeiter 3.1, ein oder mehrere Tiere 3.2 des Betriebs und/oder ein oder mehrere Maschinen 3.3. Durch die Identitätsbeziehungen sind damit sämtliche Identitäten, die der Einrichtung 10 zugeordnet sind, an die eindeutige Kennung des Smart-Meter-Gateways 2 bzw. der Rechnereinheit gekoppelt, so dass sämtliche Prozesse, an denen die Identitäten 3, 3.1- 3.3 beteiligt sind, eindeutig dem Smart-Meter-Gateway bzw. der Rechnereinheit und/oder der Einrichtung 10, in der das Smart-Meter-Gateway bzw. die Rechnereinheit verbaut ist, zugeordnet werden können.

Bevorzugt ist jeder Identität, d.h. beispielsweise jedem Mitarbeiter 3.1, jedem Tier 3.2 einer zu überwachenden Herde und/oder jeder an einem zu überwachenden Prozess beteiligten Maschine 3.3 ein eigenständiger kryptographischer Schlüssel zugeordnet. Der Schlüssel kann insbesondere ein Schlüsselpaar aus einem öffentlichen und einem privaten Schlüssel umfassen.

Über den kryptographischen Schlüssel ist es möglich, dass die Identitäten Prozessinformationen an das Smart-Meter-Gateway-Netzwerk N bzw. das Rechnernetzwerk oder an eine Speichereinheit senden und diese Prozessinformationen mittels des kryptographischen Schlüssels eindeutig signiert und verschlüsselt abgespeichert werden. Aufgrund der Identitätsbeziehungen zwischen den Identitäten und der Zuordnung dieser Identitäten zu der Einrichtung 10 lassen sich die abgespeicherten Prozessinformationen aller durch die Identitätsbeziehungen verbundenen Identitäten eindeutig der Einrichtung 10 zuordnen. So kann beispielsweise ermittelt werden, welche Prozessschritte durch einen Mitarbeiter 3.1 oder eine Maschine 3.3 der Einrichtung 10 vollzogen wurden.

Die Tiere 3.2 können beispielsweise einen oder mehrere Sensoren aufweisen, die Informationen sammeln und über ein Netzwerk an die Speichereinheit zur Abspeicherung derselben weiterleiten. Die Sensoren können beispielsweise die Körpertemperatur, das Bewegungsverhalten, die Liege- und Stehzeiten, das Trinkverhalten des Tiers etc. erfassen. Diese Informationen können durch den kryptographischen Schlüssel des jeweiligen Tiers signiert, verschlüsselt und dem jeweiligen Tier damit eindeutig zugeordnet abgespeichert werden.

Zumindest einer Identität der Vielzahl von Identitäten können Administratorrechte eingeräumt werden. Durch diese Administratorrechte hat die Identität die Möglichkeit, die von ihr bzw. weiteren Identitäten, mit denen sie über Identitätsbeziehungen verbunden ist, generierten Prozessinformationen einzusehen und/oder zu verwalten.

Die einer Einrichtung 10 zugeordneten Identitäten und deren Identitätsbeziehungen untereinander sind vorzugsweise in einer Kette von kryptographisch miteinander verknüpften Datensätzen, d.h. der Blockchain, abgespeichert. Dadurch können die Identitäten und deren Identitätsbeziehungen zueinander nicht kompromittiert werden.

Das Abspeichern der Prozessinformationen kann entweder direkt in der Kette von kryptographisch miteinander verknüpften Datensätzen, d.h. der Blockchain, erfolgen. Alternativ ist es möglich, dass die Prozessinformationen verschlüsselt durch den kryptographischen Schlüssel, der der jeweiligen Identität zugeordnet ist, in einer Speichereinheit abgespeichert wird. Diese Speichereinheit speichert beispielsweise die Prozessinformationen nicht in einer Blockchain. Um in diesem Fall trotzdem eine nicht kompromittierbare Abspeicherung zu erreichen, kann nach jedem Abspeichervorgang bzw. in regelmäßigen bzw. unregelmäßigen Zeitabständen ein durch einen Hash-Algorithmus erzeugter reduzierter Datensatz der gespeicherten Prozessinformationen in einer Kette von kryptographisch miteinander verknüpften Datensätzen, d.h. der Blockchain, abgespeichert werden. Dadurch ist es möglich, auch bei hohen anfallenden Datenmengen sicherzustellen, dass die abgespeicherten Prozessinformationen nicht manipuliert werden.

Fig. 4 zeigt ein Ausführungsbeispiel eines Systems 1 zur Prozessnachverfolgung und/oder Prozessüberprüfung mehr im Detail. Das System 1 umfasst mehrere Smart-Meter-Gateway-Netzwerke N, die jeweils mehrere Smart-Meter-Gateways 2 umfassen, um, wie zuvor beschrieben, in dem jeweiligen Smart-Meter-Gateway-Netzwerk N eine Blockchain zu hosten und basierend auf einem Konsensmechanismus Daten in die Blockchain schreiben zu können. Über die Vielzahl von Smart-Meter-Gateway-Netzwerke N ist das System 1 in mehrere Zonen unterteilt, die in Figur 4 als Zonen Z1 - Z6 bezeichnet sind. Im allgemeinen Fall können auch hier anstelle der Smart-Meter-Gateways 2 Rechnereinheiten vorgesehen sein, so dass das Smart-Meter-Gateway-Netzwerk N allgemein durch ein Rechnernetzwerk gebildet wird.

In den Zonen Z1 - Z6 können unterschiedliche Aufgaben vollzogen werden und/oder die Zonen Z1 - Z6 speichern unterschiedliche Informationen in der von ihnen gehosteten Blockchain ab. Die Zonen Z1 - Z6 sind über ein Netzwerk NW miteinander verbunden und können über dieses Netzwerk Daten gesichert austauschen. Durch die Unterteilung des Systems 1 in mehrere Zonen kann die Leistungsfähigkeit des Systems gesteigert werden, insbesondere in Bezug auf Reaktionszeiten, die Menge der in der Blockchain abzuspeichernden Daten und/oder der Rechenkapazität.

Jedes Smart-Meter-Gateway 2 kann genau einem Smart-Meter-Gateway-Netzwerk N und damit einer Zone Z1 - Z6 zugeordnet sein. Alternativ ist es möglich, dass ein Smart-Meter-Gateway 2 mehreren Smart-Meter-Gateway-Netzwerken N und damit mehreren Smart-Meter-Gateway-Netzwerken N zugeordnet ist. Somit kann ein Smart-Meter-Gateway 2 Aufgaben in mehreren Zonen Z1 - Z6 übernehmen (sog. Slicing).

Nachfolgend wird beispielhaft beschrieben, welche Aufgaben durch die Zonen jeweils vollzogen werden können.

Eine erste Zone kann beispielsweise dafür verwendet werden, Informationen über die vorher beschriebenen Identitäten 3 und deren Identitätsbeziehungen zueinander abzuspeichern. Diese erste Zone kann als Ident-Zone bezeichnet werden. Diese Zone kann insbesondere Funktionalitäten bereitstellen, mittels denen neue Identitäten hinzugefügt, gelöscht oder modifiziert und mittels denen Identitätsbeziehungen zu den anderen Identitäten definiert werden können. Auch kann in dieser ersten Zone definiert werden, von welcher Art eine bestimmte Identität ist (z.B. Mitarbeiter, Maschine, Fahrzeug, Tier etc.) und welche Rechte die jeweilige Identität hat, beispielsweise Leserechte, Schreibrechte, Administratorrechte etc.

Wie zuvor beschrieben, ist jeder Identität ein kryptographischer Schlüssel, insbesondere ein Schlüsselpaar aus einem öffentlichen und einem privaten Schlüssel zugeordnet. Über diesen kryptographischen Schlüssel kann der Identität Zugriff auf das System und zumindest Teilen der darin gespeicherten Informationen gewährt werden. Des Weiteren kann die Identität mittels dieses kryptographischen Schlüssels Informationen signieren und/oder Transaktionen durchführen.

Eine zweite Zone kann eine Applikationszone bilden, in der eine oder mehrere Applikationen gespeichert sind. Insbesondere können die Applikationen auf den Smart-Meter-Gateways 2 bzw. den Rechnereinheiten des Smart-Meter-Gateway-Netzwerks N bzw. des Rechnernetzwerks gespeichert sein, und zwar weiterhin vorzugsweise in Paketen, die in die Blockchain eingebunden sind. In dieser zweiten Zone kann insbesondere eine Applikation bereitgestellt werden, über die eine Identität 3, 3.1 - 3.3 Zugriff auf Informationen des Systems 1 erhalten kann. Die Applikation kann insbesondere auch in der zweiten Zone bzw. dessen Smart-Meter-Gateway-Netzwerk N bzw. Rechnernetzwerk lauffähig sein.

Der Vorteil der zweiten Zone als Applikationszone, in der eine oder mehrere Applikationen gespeichert sind, besteht darin, dass die Applikationen nicht auf einem Endgerät, beispielsweise einem mobilen, tragbaren Endgerät beispielsweise eines Laptops, eines Smartphones oder eines Tablet-Computers, ausgeführt werden, sondern in dem Smart-Meter-Gateway-Netzwerk N bzw. dem Rechnernetzwerk. Das Endgerät fungiert vorzugsweise lediglich als Anzeigeinstrument für die anzuzeigenden Informationen. In anderen Worten werden vorzugsweise die anzuzeigenden Informationen direkt aus der Blockchain gelesen und am Endgerät dargestellt. Dadurch kann die Sicherheit des Systems 1 erhöht bzw. die Manipulation des Systems und dessen gespeicherter Informationen durch kompromittierte Applikationen verringert werden.

Eine dritte Zone kann als Dokumentenzone fungieren. Die Dokumentenzone dient vorzugsweise der Sicherung und/oder Speicherung von Dokumenten, die für die Prozessnachverfolgung bzw. Prozessüberprüfung wichtig sind. Dies können beispielsweise Lieferscheine, Qualitätsdokumente, Datenblätter etc. sein. Die Dokumentenzone bedient sich vorzugsweise einer Distributed-Ledger-Technologie, d.h. sie ist als Cluster eines distributed ledgers ausgebildet. Vorzugsweise werden bei der Distributed-Ledger-Technologie mehrere gleichgestellte Kopien des Ledgers dezentral von mehreren Smart-Meter-Gateways 2 bzw. Rechnereinheiten des Smart-Meter-Gateway-Netzwerks bzw. des Rechnernetzwerks, das die Dokumentenzone bildet, gehalten. Die Dokumentenzone ist dazu ausgebildet, dass neu hinzuzufügende Dokumente in allen Kopien des Ledgers (d.h. der Dokumentensammlung) übernommen werden und dass es zu einem Konsens über den jeweils aktuellen Stand des Ledgers kommt. Alternativ ist es auch möglich, dass die Dokumente in einer Blockchain in der Dokumentenzone gespeichert werden.

Durch die Dokumentenzone können beispielsweise folgende Funktionalitäten bereitgestellt werden. In der Dokumentenzone können die Dokumente der jeweiligen Einrichtung 10 bzw. einer Identität 3 zugeordnet digital abgespeichert werden. Zudem kann eine Verifikation der Dokumente stattfinden, beispielsweise in Form einer Formatprüfung oder einer inhaltlichen Überprüfung. Zudem können jedem Dokument eine oder mehrere Dokumenteneigenschaften zugeordnet werden, beispielsweise Dokumentenfreigabeinformationen, Lese- und/oder Schreibberechtigungen, Gültigkeitsdauerinformationen, etc. Zudem können zu den einzelnen Dokumenten weitere Informationen gespeichert werden, beispielsweise Lesebestätigungsinformationen und/oder Informationen bzgl. des Zugriffs und der Lesehistorie des jeweiligen Dokuments.

Die Dokumente können beispielsweise über einen Scanner oder eine sonstige bildaufnehmende Einrichtung aufgenommen und als digitale Datei in die Dokumentenzone eingebunden werden.

Eine weitere Zone kann als Supply-Chain-Zone ausgebildet sein. Über diese Supply-Chain-Zone ist es möglich, eine Lieferkette, die sich über mehrere Einrichtungen 10 hinweg erstreckt (z.B. Futtermittelhersteller, Landwirt, Molkerei etc.), abzubilden und den Gesamtprozess (z.B. Herstellung von Milch mit einem Gütesiegel), der sich über diese mehreren Einrichtungen hinweg vollzieht, zu überprüfen bzw. nachzuverfolgen.

Die Supply-Chain-Zone nutzt mehrere smart-contracts, die untereinander verknüpft sind, um den Gesamtprozess überprüfen bzw. nachverfolgen zu können. Die von einem smart-contract bereitgestellten Informationen können von einem oder mehreren übergeordneten smart-contracts empfangen, ausgewertet und ggf. weiterverarbeitet werden, um sicherzustellen, dass in dem Gesamtprozess bestimmte Kritierien eingehalten wurden.

So kann beispielsweise ein erster smart-contract, der dem Futtermittelhersteller zugeordnet ist, zur Überprüfung verwendet werden, dass das von diesem gelieferte Futter bestimmte Qualitätskriterien erfüllt (z.B. bio-zertifiziertes Futter). Mittels eines dem Landwirt zugeordneten zweiten smart-contracts kann überprüft werden, ob der Landwirt ein gewisses Futter des Futtermittelherstellers eingesetzt hat und die Tiere gemäß bestimmten Haltungskriterien gehalten wurden. Ein dritter smart-contract, der der Molkerei zugeordnet ist, kann dazu verwendet werden, zu prüfen, ob die vom Landwirt bezogene Milch gemäß bestimmten Kriterien weiterverarbeitet wurde.

Ein dem ersten bis dritten smart-contract übergeordneter vierter smart-contract kann dazu ausgebildet sein, die von den ersten bis dritten smart-contracts bereitgestellten Informationen zu empfangen, ggf. weiterzuverarbeiten und zu prüfen, ob bestimmte Kriterien, beispielsweise Kriterien eines Gütesiegels innerhalb der Lieferkette eingehalten wurden.

Durch die Supply-Chain-Zone können beispielsweise folgende Funktionalitäten bereitgestellt werden. Es können beispielsweise Akteure innerhalb einer Lieferkette dynamisch zueinander zugewiesen und verwaltet werden, beispielsweise durch Festlegen eines Vorgängers und/oder eines Nachfolgers zu einem bestimmten Teilnehmer. Ebenso können Lieferketten und die Zusammenhänge zwischen den Teilnehmern der Lieferketten (wer liefert was an wen) dargestellt werden, beispielsweise durch graphische Darstellung.

Zudem können basierend auf der Supply-Chain-Zone auf die jeweilige Einrichtung 10 bzw. dessen Identitäten 3 bezogene Informationen dargestellt werden, beispielsweise der Materialfluss innerhalb einer Lieferkette oder Lieferkettenverluste. Diese Informationen können ebenfalls über mehrere miteinander zusammenwirkende smart contracts zusammengestellt werden.

Auch können basierend auf der Supply-Chain-Zone Informationen zusammengestellt und vorzugsweise chronologisch dargestellt werden werden. Diese Informationen können beispielsweise angeben, wer zu welchem Zeitpunkt welche Handlung in der Lieferkette vollzogen hat. Diese Informationen können dann beispielsweise anhand einer Zeitachse chronologisch dargestellt werden.

Die Verkettung mehrerer Smart-Contracts in der Supply-Chain-Zone ist vorzugsweise derart ausgebildet, dass zur Prozessnachverfolgung und/oder-überprüfung es nicht nötig ist, die einzelnen Primärinformationen, die von den jeweiligen Teilnehmern in der Lieferkette erzeugt und gespeichert werden, einzeln durch Prüfpersonal überwacht werden muss, sondern die Smart-Contracts, die zur Prozessnachverfolgung und/oder -überprüfung eingesetzt werden, greifen auf die Informationen automatisiert zu und prüfen, ob gewisse Bedingungen (beispielsweise Bedingungen zur Erreichung eines Gütesiegels) in der Lieferkette eingehalten wurden. Die verketteten Smart-Contracts stellen beispielsweise als Überprüfungsergebnis eine Information bereit, ob ein Satz von Bedingungen eingehalten wurde oder nicht (insbesondere binäre Ja/Nein-Informationen). Dadurch wird erreicht, dass keine Dritten Zugang zu den Prozessdaten der einzelnen Teilnehmer bzw. Einrichtungen 10 haben.

Die Smart-Contracts der Supply-Chain-Zone und die Verkettung derer untereinander werden vorzugsweise von einer vertrauenswürdigen Institution, beispielsweise einer Zertifizierungsstelle oder einer Prüfstelle bereitgestellt.

Eine weitere Zone kann eine Geräte-Zone sein. In dieser Geräte-Zone können Geräte, die zur Ermittlung von Prozessinformationen verwendet werden, verwaltet und /oder aktiviert werden. So kann beispielsweise festgelegt werden, welche Verbindungseigenschaften ein Gerät hat, welche Informationen durch das Gerät gewonnen werden und wie die Informationen weiterzuverarbeiten sind.

So kann beispielsweise in der Geräte-Zone festgelegt werden, welcher Identität die von einem Gerät erzeugten Informationen zugeordnet werden sollen und/oder ob die Daten vom Gerät direkt in die Blockchain oder eine Speichereinheit geschrieben werden sollen oder an eine andere Netzwerkkomponente weitergegeben werden soll (sog. edge device). Geräte, die direkt in die einer Identität zugeordneten Blockchain schreiben können, werden als "enabled devices" bezeichnet.

Vorzugsweise kann die Sichtbarkeit der Informationen, die durch ein Gerät gewonnen werden, durch die Identität festgelegt werden, der das Gerät zugeordnet ist.

Die Geräte-Zone kann beispielsweise auch einen oder mehrere Smart-Contracts umfassen, die eine Aggregation von Informationen und/oder eine Weiterverarbeitung der Informationen bewirken.

Die Smart-Contracts werden vorzugsweise selbst in der Blockchain gespeichert, um beispielsweise für Behörden, Lieferkettenteilnehmer, Endverbraucher o.ä. transparent darzulegen, wie und nach welchem Schema Informationen ausgewertet werden, um deren Modifikation nachvollziehen zu können und deren unberechtigte Manipulation zu verhindern.

Voranstehend wurden mehrere Zonen und die durch diese abgedeckten Funktionalitäten beschrieben. Es versteht sich, dass zwei oder mehrere Funktionalitäten, die vorher im Zusammenhang mit unterschiedlichen Zonen beschrieben wurden, auch in einer gemeinsamen Zone vollzogen werden können, die durch ein Smart-Meter-Gateway-Netzwerk bzw. ein Rechnernetzwerk gebildet wird.

Nachfolgend wird ein Ausführungsbeispiel für ein Verfahren zur Prozessnachverfolgung und/oder -überprüfung näher beschrieben.

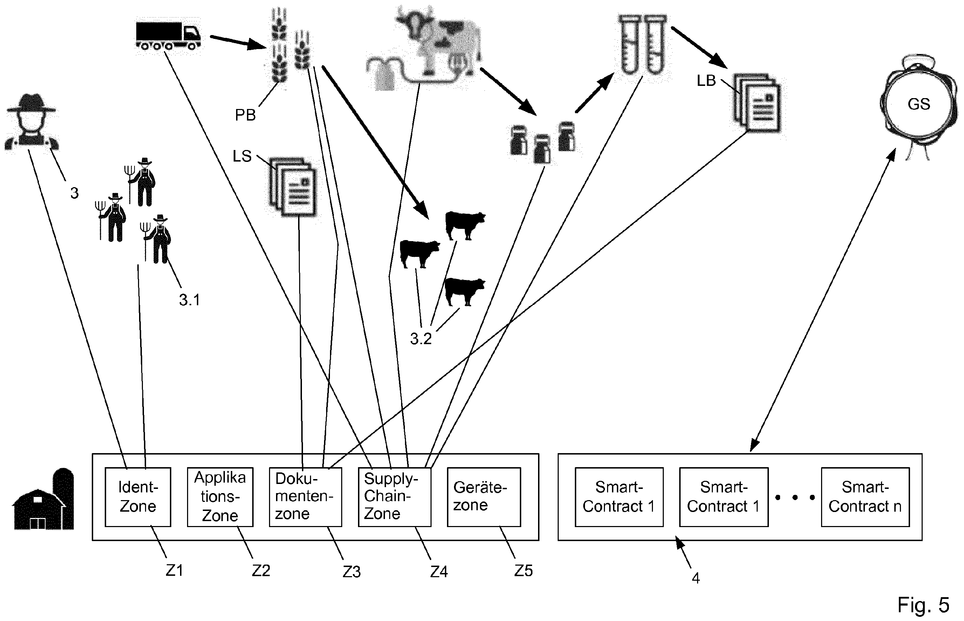

Fig. 5 zeigt schematisch und beispielhaft einen zu überprüfenden Prozess zur Herstellung von Milch, die mit einem bestimmten Gütesiegel GS versehen ist.

Zur Prüfung, ob die Kriterien für die Vergabe des Gütesiegels GS erfüllt sind, wird das vorbeschriebene Verfahren zur Prozessnachverfolgung und/oder -überprüfung eingesetzt. Hierbei kommen in dem System beispielsweise mehrere Smart- Meter-Gateway-Netzwerke N bzw. Rechnernetzwerke zum Einsatz, wobei jeweils ein Smart-Meter-Gateway-Netzwerk N einer Zone Z1 - Z5 zugeordnet ist. Die Zone Z1 bildet beispielsweise die Ident-Zone, die Zone Z2 beispielsweise die Applikations-Zone, die Zone Z3 beispielsweise die Dokumenten-Zone, die Zone Z4 beispielsweise die Supply-Chain-Zone und die Zone Z5 beispielsweise die Geräte-Zone.

Des Weiteren weist das System mehrere Smart-Contracts 4 auf. Insbesondere sind Smart-Contracts vorgesehen, die der Überprüfung der Kriterien des Gütesiegels GS dienen. Beispielsweise eine Prüfstelle oder eine übergeordnete staatliche Stelle, die das Gütesiegel GS vergibt, definiert den Inhalt dieser Smart-Contracts, die auch durch eine Behörde oder staatliche Organisation auditiert werden können. Durch die Speicherung der Smart-Contracts in der Blockchain sind diese nach Prüfung und Erstellung nicht kompromittierbar. Zudem sind vorzugsweise für alle externen Teilnehmer die zugrunde liegenden Parameter der Entscheidungskriterien jederzeit einsehbar. Über diese Smart-Contracts ist eine automatisierte Prüfung der definierten Prüfkriterien möglich. Eine Prüfung durch Prüfpersonal, beispielsweise in Form von Stichproben, ist damit nicht mehr notwendig, da eine Prüfung kontinuierlich, quasikontinuierlich oder in zeitlich eng gestaffelten Zeitpunkten automatisiert im System stattfindet.

Der Landwirt bzw. dessen Mitarbeiter sind als Identitäten 3, 3.1 in der Ident-Zone definiert. Ebenso können die Tiere jeweils als Identität 3.2 angelegt sein. Diese Identitäten können beispielsweise Transaktionen signieren. So kann der Landwirt bzw. dessen Mitarbeiter den Empfang eines Futtermittels beispielsweise als eine Transaktion signieren, was zu einer Abspeicherung von Daten mit Bezugnahme auf dessen Identität führt. Die Tiere können beispielsweise mit Sensoren ausgestattet sein, die Daten über das jeweilige Tier liefern (z.B. Liegen oder Stehen, Tier im Stall oder draußen, Körpertemperatur, etc.). Diese Daten können ebenfalls mit Bezugnahme auf die Identität des Tieres abgespeichert werden. Die Abspeicherung von Daten erfolgt, wie vorher beschrieben, verschlüsselt unter Verwendung eines kryptographischen Schlüssels der jeweiligen Identität, so dass die abgespeicherten Daten einer Identität eindeutig zugeordnet werden können.

In der Dokumentenzone werden Dokumente gespeichert, die sich auf den jeweiligen Prozess beziehen. Dies können beispielsweise Prüfberichte PB eines Futters, Lieferscheine LS, Rechnungen oder aber Laborberichte LB, beispielsweise von Proben der gelieferten Milch etc. sein.

Der Supply-Chain-Zone sind eine oder mehrere Smart-Contracts 4 zugeordnet, mittels denen die Lieferkette der Milch abgebildet wird und über die eine Verknüpfung der abgespeicherten Daten erfolgt. Die Supply-Chain-Zone kann eine Verknüpfung von Daten über mehrere Einrichtungen 10 hinweg realisieren, beispielsweise von Daten des Hofs des Landwirts, des Futtermittellieferanten, der Molkerei etc. So können beispielsweise über die Supply-Chain-Zone Daten unterschiedlicher Einrichtungen 10 zusammengeführt werden, beispielsweise Informationen über die Art des verwendeten Futtermittels, die Haltung der Tiere im landwirtschaftlichen Betrieb, die Verarbeitung der Milch in der Molkerei etc.

Eine Organisation, die das Gütesiegel GS vergibt, kann anschließend über mehrere Smart-Contracts, insbesondere mehrere miteinander verknüpfte Smart-Contracts überprüfen, ob die dem Gütesiegel GS zugrundeliegenden Qualitätskriterien eingehalten wurden, und zwar nicht nur im Bereich des landwirtschaftlichen Betriebs, sondern über mehrere beteiligte Einrichtungen der Lieferkette hinweg. Hierzu stellen die Smart-Contracts jeweils Ergebnisse bereit, die entweder direkt einem Prüfkriterium entsprechen oder ein SmartContract gibt ein oder mehrere Ergebnisse an die einen übergeordneten Smart-Contract weiter, der dieses Ergebnis empfängt und anschließend weiterverarbeitet. Dadurch ist es möglich, die einem Gütesiegel GS zugrundeliegenden Qualitätskriterien automatisiert zu prüfen, ohne dass Prüfpersonen direkt Einsicht in die von den beteiligten Einrichtungen der Lieferkette abgespeicherten Informationen nehmen müssen.

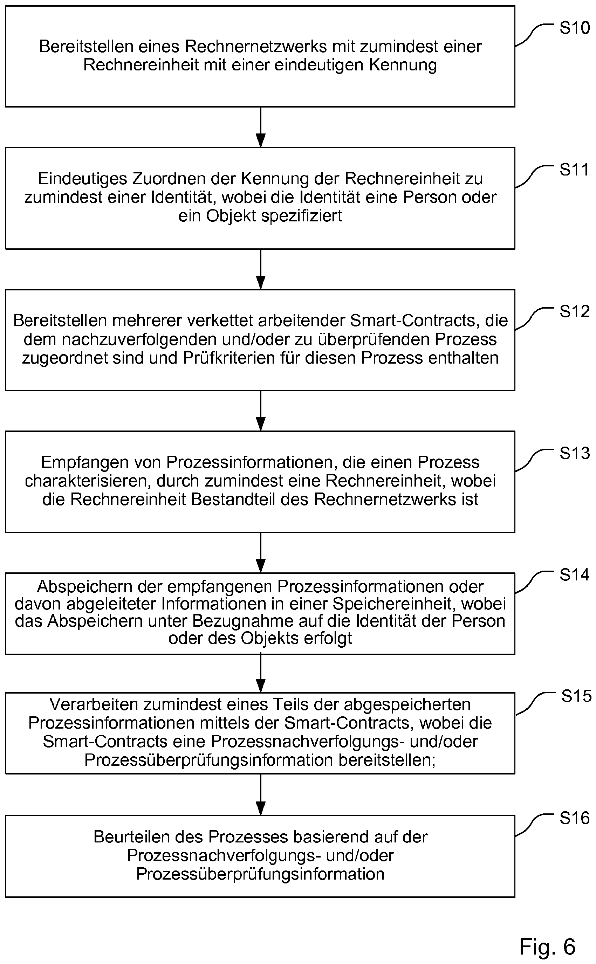

Fig. 6 zeigt schematisch die Verfahrensschritte eines Verfahrens zur Prozessnachverfolgung und/oder Prozessüberprüfung.

Zunächst wird ein Rechnernetzwerk mit mehreren Rechnereinheiten bereitgestellt, wobei zumindest eine Rechnereinheit, vorzugsweise alle Rechnereinheiten eine eindeutige Kennung aufweisen (S10).

Die Kennung der Rechnereinheit wird anschließend eindeutig zumindest einer Identität zugeordnet, wobei die Identität eine Person oder ein Objekt spezifiziert (S11).

Zudem werden mehrere Smart-Contracts bereitgestellt, die dem nachzuverfolgenden und/oder zu überprüfenden Prozess zugeordnet sind und Prüfkriterien zur Prozessnachverfolgung und/oder Prozessüberprüfung enthalten (S12). Die Smart-Contracts sind zum verketteten Arbeiten untereinander ausgebildet.

Des Weiteren werden Prozessinformationen durch zumindest eine Rechnereinheit empfangen, die einen Prozess charakterisieren, wobei die Rechnereinheit Bestandteil des Rechnernetzwerks ist (S13).

Die empfangenen Prozessinformationen oder davon abgeleitete Informationen werden in einer Speichereinheit abgespeichert (S14), wobei das Abspeichern der empfangenen Prozessinformationen unter Bezugnahme auf die Identität der Person oder des Objekts erfolgt.

Anschließend wird zumindest ein Teil der abgespeicherten Prozessinformationen mittels der Smart-Contracts verarbeitet, wobei die Smart-Contracts als Ergebnis der Verarbeitung eine Prozessnachverfolgungs- und/oder Prozessüberprüfungsinformation bereitstellen (S15).

Zuletzt wird der Prozess basierend auf der Prozessnachverfolgungs- und/oder Prozessüberprüfungsinformation beurteilt (S16).

Die Erfindung wurde voranstehend an Ausführungsbeispielen beschrieben, bei denen die Rechnereinheit durch ein Smart-Meter-Gateway gebildet wird und das Rechnernetzwerk ein Smart-Meter-Gateway-Netzwerk ist. Es sei jedoch darauf hingewiesen, dass die Erfindung grundsätzlich auch auf anderer Hardware bzw. anderen elektronischen Datenverarbeitungsanlagen realisierbar ist, so dass das Smart-Meter-Gateway ganz allgemein durch eine Rechnereinheit und das Smart-Meter-Gateway-Netzwerk durch ein Rechnernetzwerk gebildet sein kann.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrunde liegend Erfindungsgedanke verlassen wird.

### Bezugszeichenliste

- 1: System
- 2: Rechnereinheit
- 2.1: Prozessor
- 2.1.1: Prozessorbereich
- 2.2: Speichereinheit
- 2.2.1: Speicherbereich
- 2.3: Kommunikationsschnittstelle
- 3: Identität
- 3.1: Mitarbeiter
- 3.2: Tier
- 3.3: Maschine
- 4: Smart-Contract
- 5: Messaufnehmer
- 6: gekapselter Bereich

- 10: Einrichtung

- LB: Laborbericht
- LS: Lieferschein
- N: Rechnernetzwerk
- NW: Netzwerk
- PB: Prüfbericht
- Z1 - Z6: Zone

## Patentansprüche

1. Verfahren zur Prozessnachverfolgung und/oder Prozessüberprüfung basierend auf zumindest einem Rechnernetzwerk (N) umfassend mehrere Rechnereinheiten (2), wobei das Verfahren folgende Schritte aufweist:
- Bereitstellen eines Rechnernetzwerks (N) umfassend mehrere Rechnereinheiten (2), wobei zumindest eine Rechnereinheit (2) eine eindeutige Kennung aufweist, wobei das Rechnernetzwerk (N) als Blockchain-Netzwerk ausgebildet ist, wobei die Rechnereinheiten (2) des Rechnernetzwerks (N) jeweils eine Blockchain abspeichern (S10);
- Schaffen einer eindeutigen Zuordnung zwischen der Kennung der Rechnereinheit (2) und zumindest einer Identität (3), wobei die Identität (3) eine Person oder ein Objekt spezifiziert (S11);
- Abspeichern mehrerer Smart-Contracts (4) in der Blockchain, wobei die Smart-Contracts (4) dem nachzuverfolgenden und/oder zu überprüfenden Prozess zugeordnet sind und Prüfkriterien zur Prozessnachverfolgung und/oder Prozessüberprüfung enthalten, wobei die Smart-Contracts (4) zum verketteten Arbeiten untereinander ausgebildet sind, und zwar derart, dass zumindest ein zweiter Smart-Contract (4) Informationen von einem ersten Smart-Contract (4) empfängt und diese auswertet und/oder weiterverarbeitet (S12);
- Empfangen von Prozessinformationen, die einen Prozess charakterisieren, durch zumindest eine Rechnereinheit (2), wobei die Rechnereinheit (2) Bestandteil des Rechnernetzwerks (N) ist (S13);
- Abspeichern der empfangenen Prozessinformationen oder davon abgeleiteter Informationen in einer Speichereinheit (S14), wobei das Abspeichern der empfangenen Prozessinformationen unter Bezugnahme auf die Identität (3) der Person oder des Objekts erfolgt;
- Verarbeiten zumindest eines Teils der abgespeicherten Prozessinformationen mittels der Smart-Contracts (S15), wobei die Smart-Contracts (4) eine Prozessnachverfolgungs- und/oder Prozessüberprüfungsinformation bereitstellen, wobei zur Prozessnachverfolgung und/oder Prozessüberprüfung basierend auf den abgespeicherten Prozessinformationen durch die Smart-Contracts (4) geprüft wird, ob eine oder mehrere Bedingungen erfüllt sind, und das Ergebnis dieser Überprüfung als Prozessnachverfolgungs- und/oder Prozessüberprüfungsinformation bereitgestellt wird, wobei die abgespeicherten Prozessinformationen an sich bei dieser Prozessnachverfolgung und/oder Prozessüberprüfung für die Personen, Objekte und/oder Smart-Contracts, die die Prozessnachverfolgungs- und/oder Prozessüberprüfungsinformation empfangen, nicht sichtbar sind; und
- Beurteilen des Prozesses basierend auf der Prozessnachverfolgungs- und/oder Prozessüberprüfungsinformation mittels zumindest eines Smart-Contracts (S16).

2. Verfahren nach Anspruch 1, **dadurch gekennzeichnet, dass** der die Prozessinformationen empfangenden Rechnereinheit (2) eine Vielzahl von Identitäten (3) zugeordnet sind, die untereinander durch Identitätsbeziehungen verknüpft sind.

3. Verfahren nach Anspruch 2, **dadurch gekennzeichnet, dass** die Identitäten (3) und deren Identitätsbeziehungen zueinander in einer Kette von kryptographisch miteinander verknüpften Datensätzen in einem Rechnernetzwerk (N) gespeichert sind.

4. Verfahren nach einem der vorhergehenden Ansprüche, **dadurch gekennzeichnet, dass** der zumindest einen Identität (3) ein kryptographischer Schlüssel zugeordnet ist und dass das Abspeichern der empfangenen Prozessinformationen oder davon abgeleiteter Informationen unter Bezugnahme auf die Identität (3) der Person oder des Objekts durch ein Verschlüsseln der abzuspeichernden Prozessinformation basierend auf dem kryptographischen Schlüssel der Identität (3) erfolgt.

5. Verfahren nach einem der Ansprüche 2 bis 4, **dadurch gekennzeichnet, dass** zumindest einer Identität (3) der Vielzahl von Identitäten Administratorrechte zur Verwaltung der Zugriffsrechte auf die abgespeicherten Prozessinformationen zugeordnet werden.

6. Verfahren nach einem der vorhergehenden Ansprüche, **dadurch gekennzeichnet, dass** die Prozessinformationen in einer Speichereinheit verschlüsselt abgespeichert werden, wobei das Abspeichern zumindest teilweise nicht in einer Kette von kryptographisch miteinander verknüpften Datensätzen erfolgt und wobei zur Dokumentation der Integrität der abgespeicherten Prozessinformationen ein durch einen Hash-Algorithmus erzeugter reduzierter Datensatz dieser Prozessinformationen in einer Kette von kryptographisch miteinander verknüpften Datensätzen abgelegt wird.

7. Verfahren nach einem der vorhergehenden Ansprüche, **dadurch gekennzeichnet, dass** den Prozess charakterisierende Dokumente abgespeichert werden, und zwar unter Zuordnung zu einer Identität (3) der Person oder des Objekts.

8. Verfahren nach einem der vorhergehenden Ansprüche, **dadurch gekennzeichnet, dass** die Rechnereinheit (2) durch ein Smart-Meter-Gateway gebildet wird oder die Rechnereinheit (2) funktionaler Bestandteil eines Smart-Meter-Gateways ist.

9. Verfahren nach einem der vorhergehenden Ansprüche, **dadurch gekennzeichnet, dass** das Rechnernetzwerk (N) durch ein Smart-Meter-Gateway-Netzwerk umfassend mehrere Smart-Meter Gateways gebildet wird, wobei ein Smart-Meter-Gateway des Rechnernetzwerks (N) die Rechnereinheit (2) bildet.

10. Verfahren nach einem der vorhergehenden Ansprüche, **dadurch gekennzeichnet, dass** durch verkettet arbeitende Smart-Contracts (4) Prozessinformationen von mehreren unterschiedlichen Identitäten (3), denen Kennungen unterschiedlicher Rechnereinheiten (2) zugeordnet sind, zu einer Prozessnachverfolgungs- und/oder Prozessüberprüfungsinformation zusammengeführt werden.

11. Verfahren nach einem der vorhergehenden Ansprüche, **dadurch gekennzeichnet, dass** die Prozessinformationen durch mehrere unterschiedliche technische Einrichtungen bereitgestellt werden und dass die Prozessinformationen der unterschiedlichen technischen Einrichtungen durch die Smart-Contracts (4) zusammengeführt werden.

12. Verfahren nach einem der Ansprüche 9 bis 11, **dadurch gekennzeichnet, dass** Teilschritte des Verfahrens in verschiedenen Zonen (Z1 - Zn) vollzogen werden, wobei jeder Zone (Z1 - Zn) ein Smart-Meter-Gateway-Netzwerk (N) umfassend mehrere Smart-Meter Gateways (2) zugeordnet ist und wobei die Smart-Meter-Gateway-Netzwerke (N) der einzelnen Zonen (Z1 - Zn) zumindest teilweise, vorzugsweise vollständig unterschiedliche Smart-Meter Gateways (2) aufweisen.

13. Verfahren nach einem der vorhergehenden Ansprüche, **dadurch gekennzeichnet, dass** zumindest eine Applikation in einer Kette von kryptographisch miteinander verknüpften Datensätzen in einem Rechnernetzwerk (N) gespeichert bzw. gehostet ist, wobei die Applikation eine lauffähige Applikation ist, die Zugriff auf die abgespeicherten Prozessinformationen hat und wobei durch das Ausführen der Applikation einer Identität (3) abhängig von deren Zugriffsrechten ein Zugriff auf die abgespeicherten Prozessinformationen an einem Endgerät bereitgestellt wird.

14. System zur Prozessnachverfolgung und/oder Prozessüberprüfung basierend auf zumindest einem Rechnernetzwerk (N) umfassend mehrere Rechnereinheiten (2), wobei zumindest eine Rechnereinheit (2) eine eindeutige Kennung aufweist, wobei das Rechnernetzwerk (N) als Blockchain-Netzwerk ausgebildet ist, wobei die Rechnereinheiten (2) des Rechnernetzwerks (N) jeweils eine Blockchain abspeichern, wobei das System (1) dazu ausgebildet ist, die folgenden Abläufe durchzuführen:
- Eindeutiges Zuordnen der Kennung der Rechnereinheit (2) zu zumindest einer Identität (3), wobei die Identität (3) eine Person oder ein Objekt spezifiziert;
- Abspeichern mehrerer Smart-Contracts (4) in der Blockchain, wobei die Smart-Contracts (4) dem nachzuverfolgenden und/oder zu überprüfenden Prozess zugeordnet sind und Prüfkriterien zur Prozessnachverfolgung und/oder Prozessüberprüfung enthalten, wobei die Smart-Contracts (4) zum verketteten Arbeiten untereinander ausgebildet sind, und zwar derart, dass zumindest ein zweiter Smart-Contract (4) Informationen von einem ersten Smart-Contract (4) empfängt und diese auswertet und/oder weiterverarbeitet;
- Empfangen von Prozessinformationen, die einen Prozess charakterisieren, durch zumindest eine Rechnereinheit (2), wobei die Rechnereinheit (2) Bestandteil des Rechnernetzwerks (N) ist;
- Abspeichern der empfangenen Prozessinformationen oder davon abgeleiteter Informationen in einer Speichereinheit, wobei das Abspeichern der empfangenen Prozessinformationen unter Bezugnahme auf die Identität (3) der Person oder des Objekts erfolgt;
- Verarbeiten zumindest eines Teils der abgespeicherten Prozessinformationen mittels der Smart-Contracts (4), wobei die Smart-Contracts (4) eine Prozessnachverfolgungs- und/oder Prozessüberprüfungsinformation bereitstellen, wobei zur Prozessnachverfolgung und/oder Prozessüberprüfung basierend auf den abgespeicherten Prozessinformationen durch die Smart-Contracts (4) geprüft wird, ob eine oder mehrere Bedingungen erfüllt sind, und das Ergebnis dieser Überprüfung als Prozessnachverfolgungs- und/oder Prozessüberprüfungsinformation bereitgestellt wird, wobei die abgespeicherten Prozessinformationen an sich bei dieser Prozessnachverfolgung und/oder Prozessüberprüfung für die Personen, Objekte und/oder Smart-Contracts, die die Prozessnachverfolgungs- und/oder Prozessüberprüfungsinformation empfangen, nicht sichtbar sind; und
- Beurteilen des Prozesses basierend auf der Prozessnachverfolgungs- und/oder Prozessüberprüfungsinformation mittels zumindest eines Smart-Contracts.

## Claims

1. Method for tracking a process and/or monitoring a process on the basis of at least one computer network (N) comprising a plurality of computer units (2), wherein the method includes the steps of:
- providing a computer network (N) comprising a plurality of computer units (2), at least one computer unit (2) having a unique identifier, the computer network (N) being designed as a blockchain network, and each of the computer units (2) of the computer network (N) storing a blockchain (S10);
- creating a unique assignment between the identifier of the computer unit (2) and at least one identity (3), the identity (3) specifying a person or an object (S11);
- storing a plurality of smart contracts (4) in the blockchain, the smart contracts (4) being assigned to the process to be tracked and/or monitored and containing test criteria for tracking a process and/or monitoring a process, the smart contracts (4) being designed to work with one another in a chained manner in such a way that at least a second smart contract (4) receives information from a first smart contract (4) and evaluates and/or further processes this information (S12);
- receiving process information characterizing a process by at least one computer unit (2), the computer unit (2) being part of the computer network (N) (S13);
- storing the received process information or information derived therefrom in a memory unit (S14), the received process information being stored with reference to the identity (3) of the person or the object;
- processing at least part of the stored process information by means of the smart contracts (S15), the smart contracts (4) providing process tracking and/or process monitoring information, wherein, in order to track a process and/or monitor a process, the smart contracts (4) check on the basis of the stored process information whether one or more conditions are met, and the result of this monitoring being provided as process tracking and/or process monitoring information, and wherein the stored process information itself is not visible to the persons, objects and/or smart contracts receiving the process tracking and/or process monitoring information during this tracking of a process and/or monitoring of a process; and
- evaluating the process on the basis of the process tracking and/or process monitoring information by means of at least one smart contract (S16).

2. Method according to claim 1, **characterized in that** the computer unit (2) receiving the process information is assigned a plurality of identities (3) which are linked to one another by identity relationships.

3. Method according to claim 2, **characterized in that** the identities (3) and their identity relationships to one another are stored in a chain of cryptographically linked data sets in a computer network (N).

4. Method according to any one of the preceding claims, **characterized in that** a cryptographic key is assigned to the at least one identity (3) and **in that** the received process information or information derived therefrom is stored with reference to the identity (3) of the person or the object by encrypting the process information to be stored on the basis of the cryptographic key of the identity (3).

5. Method according to any one of claims 2 to 4, **characterized in that** at least one identity (3) of the plurality of identities is assigned administrator rights for managing the access rights to the stored process information.

6. Method according to any one of the preceding claims, **characterized in that** the process information is stored in encrypted form in a storage unit, the storage being at least partially not carried out in a chain of cryptographically linked data sets and a reduced data set of this process information, generated by a hash algorithm, being stored in a chain of cryptographically linked data sets in order to document the integrity of the stored process information.

7. Method according to any one of the preceding claims, **characterized in that** documents characterizing the process are stored, namely with assignment to an identity (3) of the person or the object.

8. Method according to any one of the preceding claims, **characterized in that** the computer unit (2) is formed by a smart meter gateway or the computer unit (2) is a functional component of a smart meter gateway.

9. Method according to any one of the preceding claims, **characterized in that** the computer network (N) is formed by a smart meter gateway network comprising a plurality of smart meter gateways, a smart meter gateway of the computer network (N) forming the computer unit (2).

10. Method according to any one of the preceding claims, **characterized in that** process information from a plurality of different identities (3), to which identifiers of different computer units (2) are assigned, is merged into process tracking and/or process monitoring information by means of smart contracts (4) that work in chained manner.

11. Method according to any one of the preceding claims, **characterized in that** the process information is provided by a plurality of different technical devices and **in that** the process information of the different technical devices is merged by the smart contracts (4).

12. Method according to any one of claims 9 to 11, **characterized in that** partial steps of the method are carried out in different zones (Z1 - Zn), each zone (Z1 - Zn) being assigned a smart meter gateway network (N) comprising a plurality of smart meter gateways (2) and the smart meter gateway networks (N) of the individual zones (Z1 - Zn) having at least partially, preferably completely, different smart meter gateways (2).

13. Method according to any one of the preceding claims, **characterized in that** at least one application is stored or hosted in a chain of cryptographically linked data sets in a computer network (N), the application being an executable application which has access to the stored process information and, by executing the application, an identity (3) is provided with access to the stored process information on a terminal device, depending on the access rights thereof.

14. System for tracking a process and/or monitoring a process on the basis of at least one computer network (N) comprising a plurality of computer units (2), wherein at least one computer unit (2) has a unique identifier, wherein the computer network (N) is designed as a blockchain network, wherein each of the computer units (2) of the computer network (N) stores a blockchain, wherein the system (1) is designed to carry out the following processes:
- uniquely assigning the identifier of the computer unit (2) to at least one identity (3), the identity (3) specifying a person or an object;
- storing a plurality of smart contracts (4) in the blockchain, the smart contracts (4) being assigned to the process to be tracked and/or monitored and containing test criteria for tracking a process and/or monitoring a process, the smart contracts (4) being designed to work with one another in a chained manner in such a way that at least a second smart contract (4) receives information from a first smart contract (4) and evaluates and/or further processes this information;
- receiving process information which characterizes a process by at least one computer unit (2), the computer unit (2) being part of the computer network (N);
- storing the received process information or information derived therefrom in a memory unit, the received process information being stored with reference to the identity (3) of the person or the object;
- processing at least part of the stored process information by means of the smart contracts (4), the smart contracts (4) providing process tracking and/or process monitoring information, wherein in order to track a process and/or monitor a process, the smart contracts (4) check on the basis of the stored process information whether one or more conditions are met, and the result of this monitoring being provided as process tracking and/or process monitoring information, wherein the stored process information itself is not visible to the persons, objects and/or smart contracts receiving the process tracking and/or process monitoring information during this tracking of a process and/or monitoring of a process; and
- evaluating the process on the basis of the process tracking and/or process monitoring information by means of at least one smart contract.

## Revendications

1. Procédé pour suivre un processus et/ou vérifier un processus, basé sur au moins un réseau informatique (N) comprenant une pluralité d'unités informatiques (2), le procédé comprenant les étapes suivantes consistant à :
- fournir un réseau informatique (N) comprenant une pluralité d'unités informatiques (2), au moins une unité informatique (2) ayant un identifiant univoque, le réseau informatique (N) étant réalisé sous forme de réseau blockchain, les unités informatiques (2) du réseau informatique (N) stockant chacune une blockchain (S 10) ;
- créer une association univoque entre l'identifiant de l'unité informatique (2) et au moins une identité (3), l'identité (3) spécifiant une personne ou un objet (S11) ;
- stocker plusieurs contrats intelligents (4) dans la blockchain, les contrats intelligents (4) étant associés au processus à suivre et/ou à vérifier et contenant des critères de contrôle pour suivre et/ou vérifier le processus, les contrats intelligents (4) étant conçus pour travailler de façon enchaînée entre eux, et ce de telle sorte qu'au moins un deuxième contrat intelligent (4) reçoit des informations provenant d'un premier contrat intelligent (4) et les évalue et/ou les traite (S12) ;
- recevoir des informations de processus qui caractérisent un processus, par au moins une unité informatique (2), l'unité informatique (2) faisant partie du réseau informatique (N) (S13) ;
- stocker les informations de processus reçues ou des informations dérivées de celles-ci dans une unité de mémoire (S14), le stockage des informations de processus reçues étant effectué en référence à l'identité (3) de la personne ou de l'objet ;
- traiter au moins une partie des informations de processus stockées au moyen des contrats intelligents (S15), les contrats intelligents (4) fournissant des informations de suivi de processus et/ou de vérification de processus, sachant que, pour suivre et/ou vérifier le processus en se basant sur les informations de processus stockées, les contrats intelligents (4) vérifient si une ou plusieurs conditions sont satisfaites, et le résultat de cette vérification est fourni en tant qu'information de suivi de processus et/ou de vérification de processus, les informations de processus stockées n'étant pas visibles en soi, lors de ce suivi de processus et/ou de cette vérification de processus, pour les personnes, les objets et/ou les contrats intelligents qui reçoivent l'information de suivi de processus et/ou de vérification de processus ; et
- évaluer le processus en se basant sur l'information de suivi et/ou de vérification de processus au moyen d'au moins un contrat intelligent (S16).

2. Procédé selon la revendication 1,
**caractérisé en ce qu'**une pluralité d'identités (3) qui sont liées entre elles par des relations d'identité sont associées à l'unité informatique (2) recevant les informations de processus.

3. Procédé selon la revendication 2,
**caractérisé en ce que** les identités (3) et leurs relations d'identité entre elles sont stockées dans une chaîne de lots de données, liées entre eux de manière cryptographique, dans un réseau informatique (N).

4. Procédé selon l'une des revendications précédentes,
**caractérisé en ce qu'**une clé cryptographique est associée à ladite au moins une identité (3), et
le stockage des informations de processus reçues ou des informations dérivées de celles-ci en référence à l'identité (3) de la personne ou de l'objet est effectué par cryptage de l'information de processus à stocker en se basant sur la clé cryptographique de l'identité (3).

5. Procédé selon l'une des revendications 2 à 4,
**caractérisé en ce que** des droits d'administrateur sont associés à au moins une identité (3) de la pluralité d'identités pour gérer les droits d'accès aux informations de processus stockées.

6. Procédé selon l'une des revendications précédentes,
**caractérisé en ce que** les informations de processus sont stockées de manière cryptée dans une unité de mémoire, le stockage n'étant pas effectué, au moins en partie, dans une chaîne de lots de données liés entre eux de manière cryptographique, et un lot de données réduit de ces informations de processus, généré par un algorithme de hachage, étant mémorisé dans une chaîne de lots de données, liés entre eux de manière cryptographique, afin de documenter l'intégrité des informations de processus stockées.

7. Procédé selon l'une des revendications précédentes,
**caractérisé en ce que** des documents caractérisant le processus sont stockés, et ce en les associant à une identité (3) de la personne ou de l'objet.

8. Procédé selon l'une des revendications précédentes,
**caractérisé en ce que** l'unité informatique (2) est formée par une passerelle de compteur intelligent, ou l'unité informatique (2) est un composant fonctionnel d'une passerelle de compteur intelligent.

9. Procédé selon l'une des revendications précédentes,
**caractérisé en ce que** le réseau informatique (N) est formé par un réseau de passerelles de compteurs intelligents comprenant plusieurs passerelles de compteurs intelligents, une passerelle de compteurs intelligents du réseau informatique (N) formant l'unité informatique (2).

10. Procédé selon l'une des revendications précédentes,
**caractérisé en ce que** des informations de processus provenant de plusieurs identités différentes (3), auxquelles sont associés des identifiants de différentes unités informatiques (2), sont réunies en une information de suivi et/ou de vérification de processus par des contrats intelligents (4) qui travaillent de façon enchaînée.

11. Procédé selon l'une des revendications précédentes,
**caractérisé en ce que** les informations de processus sont fournies par plusieurs dispositifs techniques différents, et
**en ce que** les informations de processus des différents dispositifs techniques sont réunies par les contrats intelligents (4).

12. Procédé selon l'une des revendications 9 à 11,
**caractérisé en ce que** des étapes partielles du procédé sont exécutées dans différentes zones (Z1 - Zn), un réseau de passerelles de compteurs intelligents (N) comprenant plusieurs passerelles de compteurs intelligents (2) étant associé à chaque zone (Z1 - Zn), et les réseaux de passerelles de compteurs intelligents (N) des différentes zones (Z1 - Zn) présentant des passerelles de compteurs intelligents (2) au moins partiellement, de préférence complètement, différentes.

13. Procédé selon l'une des revendications précédentes,
**caractérisé en ce qu'**au moins une application est stockée ou hébergée dans une chaîne de lots de données, liés entre eux de manière cryptographique, dans un réseau informatique (N), l'application étant une application exécutable qui a accès aux informations de processus stockées, et l'exécution de l'application sur un terminal fournit à une identité (3) un accès aux informations de processus stockées, en fonction de ses droits d'accès.

14. Système pour suivre un processus et/ou vérifier un processus, basé sur au moins un réseau informatique (N) comprenant une pluralité d'unités informatiques (2), au moins une unité informatique (2) présentant un identifiant univoque, le réseau informatique (N) étant réalisé sous forme de réseau blockchain, les unités informatiques (2) du réseau informatique (N) stockant chacune une blockchain, le système (1) étant conçu pour effectuer les opérations suivantes :
- associer de manière univoque l'identifiant de l'unité informatique (2) à au moins une identité (3), l'identité (3) spécifiant une personne ou un objet ;
- stocker plusieurs contrats intelligents (4) dans la blockchain, les contrats intelligents (4) étant associés au processus à suivre et/ou à vérifier et contenant des critères de contrôle pour suivre et/ou vérifier le processus, les contrats intelligents (4) étant conçus pour travailler de façon enchaînée entre eux, et ce de telle sorte qu'au moins un deuxième contrat intelligent (4) reçoit des informations provenant d'un premier contrat intelligent (4) et les évalue et/ou les traite ;
- recevoir des informations de processus qui caractérisent un processus, par au moins une unité informatique (2), l'unité informatique (2) faisant partie du réseau informatique (N) ;
- stocker les informations de processus reçues ou des informations dérivées de celles-ci dans une unité de mémoire, le stockage des informations de processus reçues étant effectué en référence à l'identité (3) de la personne ou de l'objet ;
- traiter au moins une partie des informations de processus stockées au moyen des contrats intelligents, les contrats intelligents (4) fournissant des informations de suivi de processus et/ou de vérification de processus, sachant que, pour suivre et/ou vérifier le processus en se basant sur les informations de processus stockées, les contrats intelligents (4) vérifient si une ou plusieurs conditions sont satisfaites, et le résultat de cette vérification est fourni en tant qu'information de suivi de processus et/ou de vérification de processus, les informations de processus stockées n'étant pas visibles en soi, lors de ce suivi de processus et/ou de cette vérification de processus, pour les personnes, les objets et/ou les contrats intelligents qui reçoivent l'information de suivi de processus et/ou de vérification de processus ; et
- évaluer le processus en se basant sur l'information de suivi et/ou de vérification de processus au moyen d'au moins un contrat intelligent.
